(19) Europäisches Patentamt
European Patent Office
Office européen des brevets

(11) **EP 1 691 172 B1**

(12) **EUROPÄISCHE PATENTSCHRIFT**

(45) Veröffentlichungstag und Bekanntmachung des Hinweises auf die Patenterteilung:
**03.02.2016 Patentblatt 2016/05**

(51) Int Cl.:
*G01D 5/245* *(2006.01)*     *G01D 5/347* *(2006.01)*

(21) Anmeldenummer: **06002322.3**

(22) Anmeldetag: **04.02.2006**

(54) **Positionsmesseinrichtung**

Position measuring device

Dispositif de mesure de position

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **11.02.2005 DE 102005006247**

(43) Veröffentlichungstag der Anmeldung:
**16.08.2006 Patentblatt 2006/33**

(73) Patentinhaber: **Dr. Johannes Heidenhain GmbH 83292 Traunreut (DE)**

(72) Erfinder:
• **Schoser, Jürgen**
  **83368 St. Georgen (DE)**
• **Hermann, Michael**
  **83342 Tacherting (DE)**
• **Holzapfel, Wolfgang**
  **83119 Obing (DE)**

(56) Entgegenhaltungen:
**EP-A2- 0 896 206     EP-A2- 1 081 457**
**WO-A1-99/08074     WO-A2-03/021194**
**DE-A1- 19 754 595     DE-A1- 19 918 101**
**DE-A1- 19 936 181**

**Beschreibung**

Die vorliegende Erfindung betrifft eine Positionsmesseinrichtung, die zur Erzeugung positionsabhängiger Abtastsignale, insbesondere zur Erzeugung mindestens eines Referenzimpulssignals geeignet ist.

Bekannte Positionsmesseinrichtungen liefern neben Inkrementalsignalen bezüglich des Relatiwersatzes zweier zueinander beweglicher Teile in der Regel auch Referenzimpulssignale an ein oder mehreren definierten Referenzpositionen. Über die Referenzimpulssignale kann bei einer definierten Relativposition der zueinander beweglichen Teile, die mit der Abtasteinheit und dem Maßstab der Positionsmesseinrichtung verbunden sind, ein exakter Absolutbezug bei der ansonsten relativ erfolgenden Positionsmessung hergestellt werden. Bei den zueinander beweglichen Elementen kann es sich beispielsweise um das Werkstück sowie das Werkzeug einer numerisch gesteuerten Werkzeugmaschine handeln.

In Bezug auf die Anordnung der Referenzmarkierungen auf der MaßstabSeite gibt es nunmehr eine Reihe bekannter Möglichkeiten. So können diese beispielsweise auf dem Maßstab seitlich benachbart zur Inkrementalteilungsspur angeordnet werden. Problematisch an dieser Variante ist jedoch grundsätzlich, dass im Fall einer eventuellen Verdrehung bzw. Dejustierung von Maßstab und Abtasteinheit um eine Achse senkrecht zur Maßstab- oder Abtastebene die exakte Zuordnung des resultierenden Referenzimpulssignales zu einer bestimmten Periode der Inkrementalsignale ggf. nicht mehr gewährleistet ist. Um diese Problematik zu umgehen, ist beispielsweise aus der US 3,985,448 bekannt, ein oder mehrere Referenzmarkierungen in die Inkrementalteilungsspur auf dem Maßstab zu integrieren. Hierzu können an der gewünschten Referenzposition entlang der Messstrecke in der Inkrementalteilung beispielsweise ein oder mehrere Striche der periodischen Inkrementalteilungsspur weggelassen werden.

In Bezug auf das physikalische Abtastprinzip unterscheidet man bei optischen Positionsmesseinrichtungen zwischen Systemen mit und ohne Kollimationsoptik vor der verwendeten Lichtquelle. Wird keine Kollimationsoptik eingesetzt, so spricht man üblicherweise von einer divergenten Beleuchtung. Derartige Positionsmesseinrichtungen sind insbesondere hinsichtlich eines kompakten Gesamtaufbaues vorteilhaft.

Aus den Druckschriften WO 99/08074, EP 0 887 625 A2 und WO 02/065061 A1 sind nunmehr bereits Lösungen bekannt, bei Positionsmesseinrichtungen mit divergenter Beleuchtung ein Referenzimpulssignal zu erzeugen, das aus der Abtastung einer Referenzmarkierung resultiert, die in die Inkrementalteilungsspur auf dem Maßstab integriert wurde.

Die in diesen Druckschriften vorgeschlagenen Varianten zur Erzeugung eines Referenzimpulssignales erweisen sich jedoch als noch nicht optimiert im Hinblick auf eine möglichst große Effizienz in der Referenzimpulssignalerzeugung, eine geringe Störung der Inkrementalsignale bzw. eine möglichst weitgehende Eliminierung des Einflusses der erzeugten Inkrementalsignale auf das Referenzimpulssignal.

Eine Eliminierung des störenden Einflusses von Inkrementalsignalen auf ein Referenzimpulssignal, das aus der Abtastung einer in die Inkrementalteilungsspur intergrierten Referenzmarkierung resultiert, ist ferner aus der WO 99/08074 A1 sowie der EP 0 896 206 A2 bekannt. Die dort vorgeschlagenen Lösungen erweisen sich jedoch insbesondere für Positionsmesseinrichtungen noch nicht als ideal, die keine Kollimationsoptik verwenden.

Aufgabe der vorliegenden Erfindung ist es daher, eine Positionsmesseinrichtung anzugeben, die keine Kollimationsoptik besitzt und eine zuverlässige Erzeugung eines Referenzimpulssignales aus der Abtastung einer Inkrementalteilungsspur ermöglicht, in die eine Referenzmarkierung integriert ist. Die Inkrementalsignalerzeugung sollte hierbei möglichst wenig gestört werden.

Diese Aufgabe wird gelöst durch eine Positionsmesseinrichtung mit den Merkmalen im kennzeichnenden Teil des Anspruchs 1.

Vorteilhafte Ausführungsformen der erfindungsgemäßen Positionsmesseinrichtung ergeben sich aus den Maßnahmen, die in den von Anspruch 1 abhängigen Ansprüchen aufgeführt sind.

Erfindungsgemäß ist nunmehr eine Ausbildung der Referenzimpulssignal-Detektoreinheit dahingehend vorgesehen, dass diese als Bandpassfilter auf das in der Detektionsebene resultierende Streifenmuster wirkt, das an der Referenzposition amplitudenmoduliert ist, um derart ein Referenzimpulssignal der gewünschten Breite zu erzeugen.

Die Wirkung der Referenzimpulssignal-Detektoreinheit als Bandpassfilter hat zur Folge, dass aus dem amplitudenmodulierten Signal in der Detektionsebene die Grundfrequenz der abgetasteten Inkrementalteilung inclusive höherer Harmonischer hiervon ebenso eliminert wird wie ein Signalanteil, der sich nur relativ langsam verändert. Signalanteile mit Frequenzen in einem Intervall um etwa die halbe Inkrementalsignal-Grundfrequenz werden hingegen weitgehend ungeschwächt zur Erzeugung eines Referenzimpulssignals mit der gewünschten Breite akkumuliert. Aus dem erfassten Abtastsignal wird dadurch letztlich ein geeignetes Frequenzband zur Erzeugung des Referenzimpulssignals herausgefiltert.

In einer möglichen Ausführungsform umfasst eine von ggf. mehreren Referenzimpulssignal-Detektoreinheiten drei Referenzimpulssignal-Detektorelemente, die zum einen in einer definierten geometrischen Art und Weise zueinander positioniert sind und zum anderen geeignet verschaltet werden, um das gewünschte Referenzimpulssignal zu erzeugen. Vorzugsweise werden hierbei neben einem zentral angeordneten Referenzimpulssignal-Detektorelement zwei in Messrichtung symmetrisch angeordnete Referenzimpulssignal-Detektorelemente vorgesehen, die bzgl. der Inkrementalspur jeweils um ganzzahlige Vielfache von 360° versetzte Abtastsignale zum zentral angeordneten Referenzimpulssignal-Detektorelement erzeugen. Es ist vorgesehen, einerseits das zentral angeordnete Referenzimpulssignal-Detektorelement und andererseits die beiden symmetrisch hierzu angeordneten Referenzimpulssignal-Detektorelemente in Differenz zu verschalten. Das letztlich resultierende Differenzsignal stellt das Referenzimpulssignal dar.

In einer vorteilhaften Ausführungsform der vorliegenden Erfindung wird die Breite des zentral angeordneten Referenzimpulssignal-Detektorelements doppelt so groß wie die Breite eines der beiden symmetrisch hierzu angeordneten Referenzimpulssignal-Detektorelemente gewählt.

Auf Seiten des Maßstabs bzw. in der Inkrementalteilungsspur wird die aperiodische Anordnung von Teilbereichen, die die integrierte Referenzmarkierung darstellt, vorzugsweise durch Einfügen mindestens eines sog. Hellfeldes realisiert. Das Hellfeld stört hierbei die Periodizität der Inkrementalteilungsspur und besteht bei einem Auflicht-System aus einem Teilbereich erhöhter Reflektivität bzw. bei einem Durchlicht-System aus einem Teilbereich erhöhter Durchlässigkeit.

In einer ersten möglichen Ausführungsform wird die Breite des Hellfeldes in Messrichtung vorzugsweise 1,5-fach so groß wie die Teilungsperiode der Inkrementalteilungsspur gewählt. Das wird dadurch erreicht, dass ein ursprünglich opaker Teilbereich in einen reflektierenden bzw. transmittierenden umgewandelt wird. Das stellt die geringstmögliche Änderung der Periodizität der Inkrementalteilungsspur dar, bei der gleichzeitig eine verlässliche Referenzimpuls-Erzeugung gewährleistet ist. In einer weiteren Ausführungsform kann die Breite des Hellfeldes in Messrichtung auch doppelt so groß wie die Teilungsperiode der Inkrementalteilungsspur gewählt werden.

Der Abstand des Hellfelds zu einem benachbarten Teilungsbereich erhöhter Reflektivität oder erhöhter Durchlässigkeit beträgt vorzugsweise das 1.5-fache der Teilungsperiode der Inkrementalteilungsspur.

In einer weiteren vorteilhaften Ausführungsform umfasst eine Referenzmarkierung an einer Referenzposition der Messstrecke mehrere, in die Inkrementalteilungsspur integrierte Hellfelder. Die räumliche Verteilung der Hellfelder ist dabei so gewählt, dass die Autokorrelation der Verteilung derselben ein maximales Nutzsignal respektive Referenzimpulssignal ergibt. Analog hierzu ist auf der Seite der Abtasteinheit vorgesehen, innerhalb der Detektoranordnung mehrere beabstandete Referenzimpulssignal-Detektoreinheiten anzuordnen. Diese sind vorzugsweise identisch ausgebildet. Eine derartige Ausführungsform der erfindungsgemäßen Positionsmesseinrichtung erweist sich vorteilhaft zur Steigerung der Effizienz bzw. des Nutzanteils des zu erzeugenden Referenzimpulssignales. Insbesondere resultiert eine größere Unempfindlichkeit gegenüber verschiedenen Signal-Störungen, wie Maßstabverschmutzungen, Lagetoleranzen der Lichtquelle etc..

In einer weiteren Ausführungsform ist vorgesehen, in der Inkrementalteilungsspur als Referenzmarkierung mindestens zwei Hellfelder auszubilden. Abtastseitig sind mindestens zwei Referenzimpulssignal-Detektoreinheiten vorgesehen, die jeweils aus zwei in Messrichtung beabstandeten Referenzimpulssignal-Detektorelementen bestehen. Diese erfassen um jeweils 180° zueinander phasenversetzte Abtastsignale. Die Referenzimpulssignal-Detektorelemente mit unterschiedlichen Phasenlagen sind wiederum in Differenz zueinander verschaltet, das Differenzsignal stellt das Referenzimpulssignal dar. In Messrichtung ist die Abfolge von phasenverschiedenen Referenzimpulssignal-Detektorelementen dergestalt vorgesehen, dass diese in alternierender Reihenfolge von Detektoreinheit zu Detektoreinheit angeordnet werden, um eine Mittelung des resultierenden Referenzimpulssignals zu erzielen.

Die verschiedenen erfindungsgemäßen Maßnahmen lassen sich in Verbindung mit verschiedensten Lichtquellen realisieren. So kann beispielsweise als Lichtquelle eine Punktlichtquelle in Form eines VCSEL (Vertical cavity surface emitting laser) fungieren. Darüber hinaus ist es jedoch möglich, auch eine räumlich ausgedehnte Lichtquelle einzusetzen, beispielsweise eine LED. Im letztgenannten Fall erweist es sich als vorteilhaft, im Abtaststrahlengang der Lichtquelle eine im Wesentlichen periodische Gitterteilung mit durchlässigen und undurchlässigen Teilungsbereichen vorzuordnen. Diese fungiert dann in bekannter Art und Weise als sogenannte Sendeteilung. Um die Erzeugung eines Referenzimpulssignales aus der in die Inkrementalteilung integrierten Referenzmarkierung sicherzustellen, ist auf Seiten der Sendeteilung ebenfalls ein bestimmter räumlicher Bereich auf die Referenzmarkierung abzustimmen und eine entsprechende aperiodische Teilungsstruktur auszubilden. Dies kann beispielsweise dergestalt erfolgen, dass in einem Bereich der ansonsten periodischen Teilungsstruktur der Sendeteilung mindestens einer der durchlässigen oder undurchlässigen Teilungsbereiche nicht vorhanden ist.

Die verschiedenen erfindungsgemäßen Maßnahmen lassen sich selbstverständlich sowohl in Verbindung mit linearen wie auch mit rotatorischen Positionsmesseinrichtungen realisieren. Darüber hinaus können Positionsmesseinrichtungen erfindungsgemäß ausgebildet werden, die im Durchlicht oder aber im Auflicht betrieben werden.

Weitere Vorteile sowie Einzelheiten der vorliegenden Erfindung ergeben sich aus der nachfolgenden Beschreibung von Ausführungsbeispielen anhand der beiliegenden Figuren.

Dabei zeigt

Figur 1      eine stark schematisierte perspektivische Darstellung eines Ausführungsbeispiels der erfindungsgemäßen Positionsmesseinrichtung;

Figur 2a      eine schematisierte Draufsicht auf einen Teil der Referenzimpulssignal-Detektoreinheit aus Figur 1 in Verbindung mit dem erzeugten Inkrementalsignal;

Figur 2b      eine Darstellung des Realteils der Filterfunktion für die als Bandpassfilter wirkende Referenzimpulssignal-Detektoreinheit aus Figur 2a;

Figur 3a - 3c      jeweils einen Teil eines Sendegitters, des zugehörigen Maßstabs und der Detektoranordnung eines weiteren Ausführungsbeispiels;

Figur 4a - 4c      jeweils verschiedene zugehörige Signale zum Beispiel aus den Figuren 3a - 3c;

Figur 5a - 5c      jeweils einen Teil eines Sendegitters, des zugehörigen Maßstabs und der Detektoranordnung eines weiteren Ausführungsbeispiels;

Figur 6a - 6c      jeweils verschiedene zugehörige Signale zum Beispiel aus den Figuren 5a - 5c;

Figur 7a - 7c      jeweils einen Teil eines Sendegitters, des zugehörigen Maßstabs und der Detektoranordnung eines weiteren Ausführungsbeispiels;

Figur 8a - 8c      jeweils verschiedene zugehörige Signale zum Beispiel aus den Figuren 7a - 7c;

Figur 9a - 9c      jeweils einen Teil eines Sendegitters, des zugehörigen Maßstabs und der Detektoranordnung einer optischen Positionsmesseinrichtung;

Figur 10a - 10c      jeweils einen Teil eines Sendegitters, des zugehörigen Maßstabs und der Detektoranordnung einer optischen Positionsmesseinrichtung.

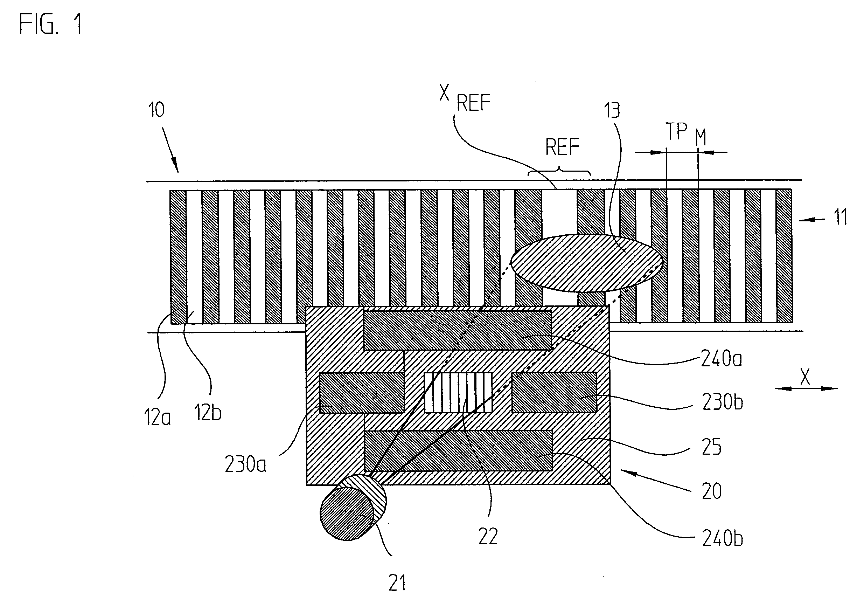

Ein erstes Ausführungsbeispiel einer erfindungsgemäßen Positionsmesseinrichtung ist in Figur 1 stark schematisiert in einer perspektivischen Darstellung gezeigt. Dieses Ausführungsbeispiel ist hierbei als lineare Positionsmesseinrichtung ausgebildet, die im Auflicht betrieben wird.

Die in Figur 1 dargestellte Positionsmesseinrichtung umfasst einen Maßstab 10 sowie eine Abtasteinheit 20, die in einer Messrichtung x beweglich zueinander angeordnet sind. Maßstab 10 und Abtasteinheit 20 sind mit zwei zueinander beweglichen Objekten verbunden, deren Relativposition zueinander zu erfassen ist. Bei diesen Objekten kann es sich z.B. um Maschinenteile an einer Werkzeugmaschine handeln. Die Positionsmesseinrichtung liefert ausgangsseitig positionsabhängige Abtastsignale, die einer Folgeelektronik zugeführt werden, etwa einer numerischen Werkzeugmaschinensteuerung. Von der Folgeelektronik werden die Abtastsignale zur Maschinensteuerung in bekannter Art und Weise weiterverarbeitet.

Der Maßstab 10 der erfindungsgemäßen Positionsmesseinrichtung umfasst eine Inkrementalteilungsspur 11, die sich in der Messrichtung x erstreckt. Die Inkrementalteilungsspur 11 besteht im dargestellten Beispiel aus einer in Messrichtung x im wesentlichen periodischen Anordnung von Teilungsbereichen 12a, 12b mit unterschiedlichen Reflexionseigenschaften. Hierbei weisen die Teilungsbereiche 12a eine geringe Reflektivität auf und seien nachfolgend u.a. auch als Dunkelfelder bezeichnet, die Teilungsbereiche 12b besitzen eine hohe Reflektivität und werden nachfolgend auch als Hellfelder bezeichnet. Mit Ausnahme der mindestens einen Referenzmarkierung REF ist die Anordnung der Teilungsbereiche 12a, 12b bzw. Hell- und Dunkelfelder periodisch mit der Inkrementalteilungsperiode $TP_M$. Im Bereich einer Referenzposition $x_{REF}$ entlang der Messstrecke ist eine Referenzmarkierung REF in die Inkrementalteilungsspur 11 integriert. Die Referenzmarkierung REF besteht aus einer aperiodischen Anordnung von Teilungsbereichen 12a, 12b, die von der ansonsten periodischen Anordnung derselben abweicht. Über die Referenzmarkierung REF wird demzufolge eine lokal begrenzte Störung in die ansonsten regelmäßige Struktur der Inkrementalteilungsspur 11 eingebracht; in einer vorteilhaften Ausführungsform werden beispielsweise ein oder mehrere Teilungsbereiche 12b bzw. Hellfelder in die periodische Inkrementalteilungsspur 11 eingebracht. In Bezug auf weitere Details zur konkreten Ausgestaltung geeigneter Referenzmarkierungen REF und den daraus resultierenden Referenzimpulssignalen sei auf die nachfolgende Beschreibung verwiesen.

Aus der Abtastung der Referenzmarkierung REF wird im Verlauf der ansonsten rein inkrementalen Positionsmessung ein Referenzimpulssignal erzeugt, das von der Folgeelektronik in bekannter Art und Weise ausgewertet wird und die Herstellung eines Absolutbezugs bei der Positionsbestimmung ermöglicht.

Die relativ zum Maßstab 10 in Messrichtung x bewegliche Abtasteinheit 20 umfasst eine Reihe weiterer Komponenten zur Erzeugung der positionsabhängigen Abtastsignale. Hierzu gehört im vorliegenden Beispiel u.a. eine Lichtquelle 21, die erfindungsgemäß keine vorgeordnete Kollimationsoptik besitzt, eine Gitterteilung in Form einer Sendeteilung 22 sowie eine optoelektronische Detektoranordnung, bestehend aus mehreren Inkrementalsignal-Detektorelementen, die in den Bereichen mit den Bezugszeichen 230a, 230b angeordnet sind, sowie mehreren Referenzimpulssignal-Detektoreinheiten in den Bereichen 240a, 240b. Die Bereiche 230a, 230b, 240a, 240b der optoelektronischen Detektoranordnung sind in Figur 1 lediglich stark schematisiert angedeutet, zu Details der dort platzierten Detektoreinheiten sei ebenfalls auf die nachfolgende Beschreibung verwiesen. Da insbesondere keine Kollimationsoptik im Abtaststrahlengang vorgesehen ist, sondern eine divergente Beleuchtung, kann die Abtasteinheit 20 der erfindungsgemäßen Positionsmesseinrichtung sehr kompakt ausgebildet werden.

Wie aus Figur 1 ersichtlich, sind die Sendeteiling 22, sowie die Elemente der optoelektronischen Detektoranordnung auf einer Abtastplatte 25 angeordnet, die beispielsweise aus einem Glasplättchen besteht.

Das von der Lichtquelle 21, z.B. einer LED, emittierte Licht durchtritt im dargestellten Beispiel zunächst ohne erfolgende Kollimation die zentral in der Abtastplatte 25 angeordnete Sendeteiling 22. Anschließend treffen die divergierenden Strahlenbündel auf einen bestimmten Bereich des Maßstabs 10 auf, der nachfolgend als Abtastfläche 13 bezeichnet sei. Die Abtastfläche 13 ist im vorliegenden Beispiel elliptisch ausgebildet und erstreckt sich mit der Ellipsen-Längsachse in Messrichtung x. Vom (Reflexions-)Maßstab 10 dieses Ausführungsbeispiels erfolgt die Rückreflexion der Strahlenbündel in Richtung Abtasteinheit 20 bzw. Abtastplatte 25. Dort wird in der Detektionsebene aufgrund der resultierenden Wechselwirkung der Strahlenbündel mit den verschiedenen Teilungen im Abtaststrahlengang ein periodisches Streifenmuster erzeugt. Im Fall der Relativbewegung von Maßstab 10 und Abtasteinheit 20 wird dieses Streifenmuster in bekannter Art und Weise periodisch moduliert, von den Detektorelementen der optoelektronischen Detektoranordnung erfasst und in positionsabhängige Abtastsignale umgesetzt, die von der Folgeelektronik weiterverarbeitet werden.

In Bezug auf das Abtastprinzip entspricht der Abtaststrahlengang des erläuterten Ausführungsbeispiels einem sogenannten Dreigittergeber mit divergenter Beleuchtung, wie er z.B. aus der Veröffentlichung von R.M. Pettigrew mit dem Titel, "Analysis of Grating Images and its Application to Displacement Metrology" in SPIE Vol. 136, 1st European Congress on Optics Applied to Metrology (1977), S. 325 - 332 bekannt ist.

Das erste durchlaufene Gitter wird im Beispiel der Figur 1 durch die Sendeteiling 22 gebildet, das zweite Gitter stellt der abgetastete Maßstab 10 dar, während das dritte Gitter durch eine periodische Ausgestaltung der Detektoranordnung in Form einer bekannten strukturierten Detektoranordnung gebildet wird. Eine derartige strukturierte Detektoranordnung besteht beispielsweise aus einer Vielzahl einzelner schmaler, rechteckförmiger Detektorelemente, die sich in Messrichtung x erstreckend angeordnet sind. Diejenigen Detektorelemente sind zur Inkrementalsignalerzeugung elektrisch leitend miteinander verbunden, die aus der Abtastung des darauf projizierten Streifenmusters phasengleiche Abtastsignale erzeugen. Im Fall der üblichen Quadraturauswertung liegen vier Gruppen inkrementaler Abtastsignale vor, die jeweils einen Phasenversatz von 90° zueinander aufweisen. Vorzugsweise wird mittels einer derartigen Detektoranordnung eine sogenannte Einfeldabtastung realisiert, bei der innerhalb einer abgetasteten Streifenmusterperiode vier phasenverschiedene Detektorelemente platziert sind. Derart können aus der Abtastung einer einzigen Streifenmusterperiode alle vier Signalanteile des Inkrementalsignals gewonnen werden. Es resultiert eine Abtastung, die insbesondere Vorteile hinsichtlich Verschmutzungsunempfindlichkeit bietet.

Besonders vorteilhaft erweist es sich, wenn die Detektorelemente aus amorphem Silizium ($\alpha$-Si) ausgebildet sind, da sich in diesem Fall besonders feine Strukturen realisieren lassen. Dies ist insbesondere bei resultierenden kleinen Streifenmusterperioden in der Detektionsebene von Bedeutung, bei denen im Fall herkömmlicher Silizium-Detektorelemente oftmals Probleme mit dem Signal-Übersprechen zwischen benachbarten, phasenverschiedenen Detektorelementen auftreten.

Das in der Detektionsebene resultierende Streifenmuster ist im Fall der Abtastung der Inkrementalteilungsspur 11 außerhalb der Referenzmarkierung REF im vorliegenden Beispiel periodisch mit der Streifenmusterperiode $TP_S$. Im Bereich der Referenzmarkierung REF ist das resultierende Streifenmuster aufgrund der aperiodischen Struktur in der Inkrementalteilungsspur 11 gestört; das Abtastsignal weist an dieser Position $x_{REF}$ eine Amplitudenmodulation auf. Aus der Erfassung der Amplitudenmodulation des Streifenmusters in diesem Bereich über geeignet ausgebildete Referenzimpulssignal-Detektoreinheiten wird das Referenzimpulssignal RI erzeugt. Wie eine erfindungsgemäße Ausgestaltung der Referenzimpulssignal-Detektoreinheiten erfolgt, die in Figur 1 in den Bereichen 240a, 240b angeordnet sind, sei im Verlauf der nachfolgenden Beschreibung noch detailliert erläutert.

Wie bereits oben angedeutet, lassen sich die erfindungsgemäßen Prinzipien selbstverständlich auch auf rotatorische Positionsmesseinrichtungen übertragen, bei denen der Maßstab aus einer Teilscheibe mit einer kreisringförmigen Inkrementalteilungsspur besteht. Ferner kann alternativ zum vorliegenden Beispiel auch ein Durchlichtsystem basierend auf den erfindungsgemäßen Überlegungen ausgebildet werden. Hierzu würde die Inkrementalteilungsspur auf dem Maßstab dann alternierend angeordnete Teilbereiche unterschiedlicher Durchlässigkeit umfassen; ferner wäre in einem derartigen Fall die Abtasteinheit in bekannter Art und Weise so auszugestalten, dass diese den Maßstab umgreift, d.h. die Lichtquelle und die Sendeteiling einerseits sowie die Detektoranordnung andererseits wären dann auf gegenüberliegenden Seiten des Maßstabs angeordnet.

Im Fall der Realisierung eines Durchlichtsystems würde ein Hellfeld gemäß den obigen Erläuterungen in einer Teilungsstruktur demzufolge einem Teilbereich mit erhöhter Durchlässigkeit entsprechen, ein Dunkelfeld einem Teilbereich mit verringerter Durchlässigkeit.

Ferner wäre es im Rahmen der vorliegenden Erfindung auch möglich, im Fall der Verwendung einer Punktlichtquelle - anstelle der ausgedehnten LED wie im oben erläuterten Beispiel - auf die Sendeteilung zu verzichten. In diesem Fall wäre der zentrale Bereich der Abtastplatte vollständig transparent für die emittierten Lichtbündel ausgestaltet.

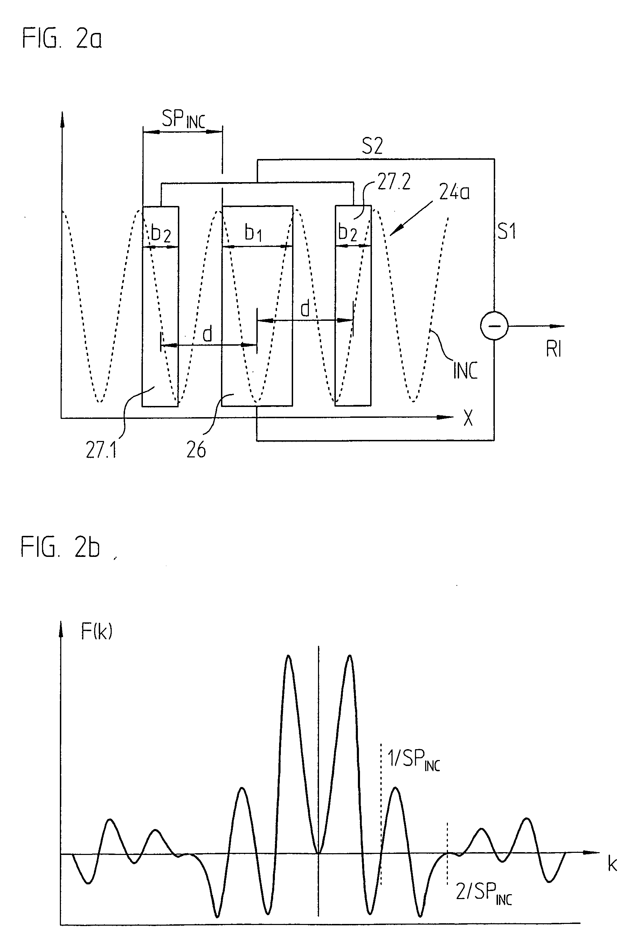

Zur weiteren Erläuterung der erfindungsgemäßen Maßnahmen auf der Detektionsseite sei nunmehr auf die Figuren 2a und 2b verwiesen. Figur 2a zeigt hierbei eine schematisierte Draufsicht auf einen Teil einer Referenzimpulssignal-Detektoreinheit 24a in Verbindung mit einem inkrementalen Abtastsignal INC, in Figur 2b ist die zu einer derartigen Ausgestaltung gehörige Filterfunktion F(k) der als Bandpassfilter wirkenden Referenzimpulssignal-Detektoreinheit aus Figur 2a dargestellt.

Wie bereits oben erwähnt, ist erfindungsgemäß eine Ausbildung der Referenzimpulssignal-Detektoreinheit dahingehend vorgesehen, dass diese als Bandpassfilter auf das in der Detektionsebene resultierende, an der Referenzposition $x_{REF}$ amplitudenmodulierte Streifenmuster wirkt, um derart ein Referenzimpulssignal RI der gewünschten Breite zu erzeugen. Die Wirkung der Referenzimpulssignal-Detektoreinheit als Bandpassfilter hat zur Folge, dass aus dem amplitudenmodulierten Abtastsignal in der Detektionsebene die Grundfrequenz $f_{INC}$ der abgetasteten Inkrementalteilung inclusive höherer Harmonischer hiervon ebenso eliminiert wird wie ein weiterer Signalanteil, der sich nur relativ langsam verändert. Signalanteile mit Frequenzen in einem definierten Intervall um etwa die halbe Inkrementalsignal-Grundfrequenz $f_{INC}/2$ werden hingegen weitgehend ungeschwächt zur Erzeugung eines Referenzimpulssignals RI mit der gewünschten Breite akkumuliert. Aus dem erfassten Abtastsignal wird dadurch letztlich ein geeignetes Frequenzband zur Erzeugung des Referenzimpulssignals RI herausgefiltert.

Prinzipiell identisch zur Referenzimpulssignal-Detektoreinheit 24a in Figur 2a ist die zweite Referenzimpulssignal-Detektoreinheit 24b des Beispiels aus Figur 1 aufgebaut. Die Referenzimpulssignal-Detektoreinheiten 24a, 24b sind gemäß Figur 1 auf der Abtastplatte 25 in den Bereichen 240a, 240b angeordnet.

Nachfolgend sei erläutert, wie die Bandpass-Funktionalität zur Erzeugung eines Referenzimpulssignals RI durch die geeignete Ausgestaltung einer Referenzimpulssignal-Detektoreinheit 24a z.B. realisiert werden kann. Im dargestellten Ausführungsbeispiel besteht die Referenzimpulssignal-Detektoreinheit 24a aus drei einzelnen Referenzimpulssignal-Detektorelementen 26, 27.1, 27.2. Über die geometrische Dimensionierung sowie die Verschaltung der Referenzimpulssignal-Detektorelemente 26, 27.1, 27.2 erfolgt im wesentlichen die angestrebte Bandpass-Filterung des amplitudenmodulierten Streifenmusters bzw. des entsprechenden Abtastsignals an der Referenzposition $x_{REF}$, um dergestalt ausgangsseitig das gewünschte Referenzimpulssignal RI zu erzeugen. Zu diesem Zweck sind im vorliegenden Beispiel ein zentrales Referenzimpulssignal-Detektorelement 26 sowie zwei hierzu symmetrisch angeordnete Referenzimpulssignal-Detektorelemente 27.1, 27.2 vorgesehen. Die Breite $b_1$ des zentral angeordneten Referenzimpulssignal-Detektorelements 26 wird zur Filterung hierbei vorzugsweise gleich der Signalperiode $SP_{INC}$ der erzeugten Inkrementalsignale INC gewählt.

Derart resultiert bei der Abtastung des Streifenmusters in der Detektionsebene eine Mittelung des sinusförmigen Inkrementalsignals INC über eine Signalperiode $SP_{INC}$ und damit der gewünschte Filtereffekt bzgl. des periodischen Inkrementalsignalanteils. Die Breiten $b_2$ der beiden symmetrisch angeordneten Referenzimpulssignal-Detektorelemente 27.1, 27.2 werden zum einen identisch gewählt und zum anderen gleich der Hälfte der Breite $b_1$ des zentralen Referenzimpulssignal-Detektorelements 26, d.h. $b_2 = \frac{1}{2} * b_1$.

Allgemein lässt sich die Durchlasscharakteristik eines Bandpassfilters in bekannter Art und Weise durch dessen Filterfunktion F(k) beschreiben, wobei mit k die durchgelassenen Frequenzanteile des jeweiligen Signals bezeichnet werden. Im Ausführungsbeispiel der Referenzimpulssignal-Detektoreinheit 24a der Figur 2a lässt sich die zugehörige Filterfunktion F(k) mit der Verteilung der davon durchgelassenen Raumfrequenzanteile k durch die folgende Beziehung (Gl. 1) beschreiben:

$$F(k) = \frac{\sin(\pi b_1 k)}{\pi k} - 2\eta \frac{\sin(\pi b_2 k)}{\pi k} \cos(2\pi dk) \quad \text{(Gl. 1)}$$

Für die einzelnen Größen in (Gl. 1) gilt:

k:      Raumfrequenz

$b_1$:     Breite des zentralen Referenzimpulssignal-Detektorelements

$b_2$:     Breite eines der beiden äußeren Referenzimpulssignal-Detektorelemente

d:      Abstand eines der äußeren Referenzimpulssignal-Detektorelemente zum zentralen Referenzimpulssignal-Detektorelement

η:      Relative Gewichtung bzw. Flächhenverhältnis zwischen den beiden äußeren Referenzimpulssignal-Detektorelementen und dem zentralen Referenzimpulssignal-Detektorelement

In Figur 2b ist der Verlauf der Filterfunktion F(k) für die Parameterkombination

$$b_1 = 35\mu m, \ b_2 = 35\mu m, \ \eta = 1 \ und \ d = 48{,}75\mu m$$

der Referenzimpulssignal-Detektoreinheit 24a aus Figur 2a dargestellt. Deutlich erkennbar in Figur 2b sind die Nullstellen im Verlauf der Filterfunktion F(k) bei der Grundfrequenz $f_{INC} = 1/SP_{INC}$ des Inkrementalsignals sowie bei deren Harmonischen wie z.B. bei $2/SP_{INC}$ etc.. Durchgelassen und als Referenzimpulssignal genutzt wird hingegen wie oben erläutert ein durchgelassenes Frequenzband im Bereich der halben Grundfrequenz des Inkrementalsignals $f_{INC}$.

In Abhängigkeit der frei wählbaren Parameter $b_1$, $b_2$ und $\eta$ der Referenzimpulssignal-Detektoreinheit lässt sich aus (Gl. 1) im vorliegenden Fall eine Bedingung in Form von (Gl. 2) für den Abstand d zwischen dem zentralen Referenzimpulssignal-Detektorelement und einem äußeren Referenzimpulssignal-Detektorelement angeben, um eine Referenzimpulssignal-Detektoreinheit aufzubauen, bei der wie erläutert die Grundfrequenz $F_{INC} = 1/SP_{INC}$ des Inkrementalsignals und ggf. deren Harmonische aus dem resultierenden Referenzimpulssignal herausgefiltert werden:

$$d = \frac{SP_{INC}}{2\pi} * \arccos\left[\frac{1}{2\eta}\frac{\sin\left(\pi b_1 / SP_{INC}\right)}{\sin\left(\pi b_2 / SP_{INC}\right)}\right] - zSP_{INC} \quad \text{(Gl. 2)}$$

Mit:

z: ganze Zahl
$SP_{INC}$: Signalperiode des Inkrementalsignals
$b_1$: Breite des zentralen Referenzimpulssignal-Detektorelements
$b_2$: Breite eines der beiden äußeren Referenzimpulssignal-Detektorelemente

Für jede Wertekombination von b1, b2 und $\eta$, für den eine mathematische Lösung existiert, liefert (Gl. 2) eine Ausgestaltung der Referenzimpulssignal-Detektoreinheit, die ein Referenzimpulssignal mit herausgefilterter Grundfrequenz des Inkrementalsignals erzeugt. Wie nachfolgend erläutert sei, vereinfacht sich (Gl. 2) für besonders vorteilhafte Ausführungsformen von Detektoranordnungen.

Im dargestellten Beispiel der Figur 2a sind die beiden äußeren Referenzimpulssignal-Detektorelemente 27.1, 27.2 derart in Bezug auf das zentrale Referenzimpulssignal-Detektorelement angeordnet, dass darüber Abtastsignale erzeugt werden, die im allgemeinen Fall N * 360° (N = 1, 2, 3....) phasenversetzt zum Abtastsignal des zentralen Referenzimpulssignal-Detektorelements 26 sind. Im Beispiel der Figur 2a wurde N = 1 und eine Breitenbeziehung $b_2 = \frac{1}{2} * b_1$ für die beiden Referenzimpulssignal-Detektorelemente 27.1, 27.2 gewählt. Für diese Anordnung ergeben sich aus (Gl. 2) für den zu wählenden Abstand d zwischen den Mitten des zentralen Referenzimpulssignal-Detektorelements 26 und den beiden äußeren Referenzimpulssignal-Detektorelementen 27.1 bzw. 27.2 die vereinfachten Beziehungen (Gl. 3.1) oder (Gl. 3.2):

$$d = n * SP_{INC} + 0{.}5\,b_2 \qquad \text{(Gl. 3.1)}$$

$$d = n * SP_{INC} - 0{.}5\,b_2 \qquad \text{(Gl. 3.2)}$$

mit:

$SP_{INC}$: Signalperiode des Inkrementalsignals
$b_2$: Breite eines der beiden äußeren Referenzimpulssignal-Detektorelemente
n = 0, 1, 2, 3, .......

Zur Erzeugung des Referenzimpulssignals RI ist im Beispiel der Figur 2a des weiteren vorgesehen, die beiden äußeren Referenzimpulssignal-Detektorelemente 27.1, 27.2 einerseits miteinander zum Signal S2 zu verschalten und dieses Signal S2 wiederum in Differenz mit dem resultierenden Signal S1 des zentralen Referenzimpulssignal-Detektorelements 26 zu verschalten. Das resultierende Signal aus der Differenz-Verschaltung der Signale S1 und S2 stellt schließlich das ausgangsseitig anliegende Referenzimpulssignal RI dar.

Über eine derartige Ausgestaltung der Referenzimpulssignal-Detektorelemente 26, 27.1, 27.2 in Form der gewählten Geometrie und Verschaltung erfolgt letztlich eine Auslegung der Referenzimpulssignal-Detektorelemente 26, 27.1, 27.2 als Bandpass. Über diesen Bandpass wird aus dem in der Detektionsebene resultierenden Streifenmuster mit der aufgeprägten Störung aus der in die Inkrementalteilungsspur 11 integrierten Referenzmarkierung REF ein Frequenzband herausgefiltert, das das eigentliche Referenzimpulssignal RI darstellt.

Anhand der folgenden Figuren seien nunmehr weitere Ausführungsbeispiele zu Ausgestaltungen von Sendeteilung, Maßstab, Referenzimpulssignal-Detektorelementen sowie die resultierenden Signalverläufe in der erfindungsgemäßen Positionsmesseinrichtung erläutert.

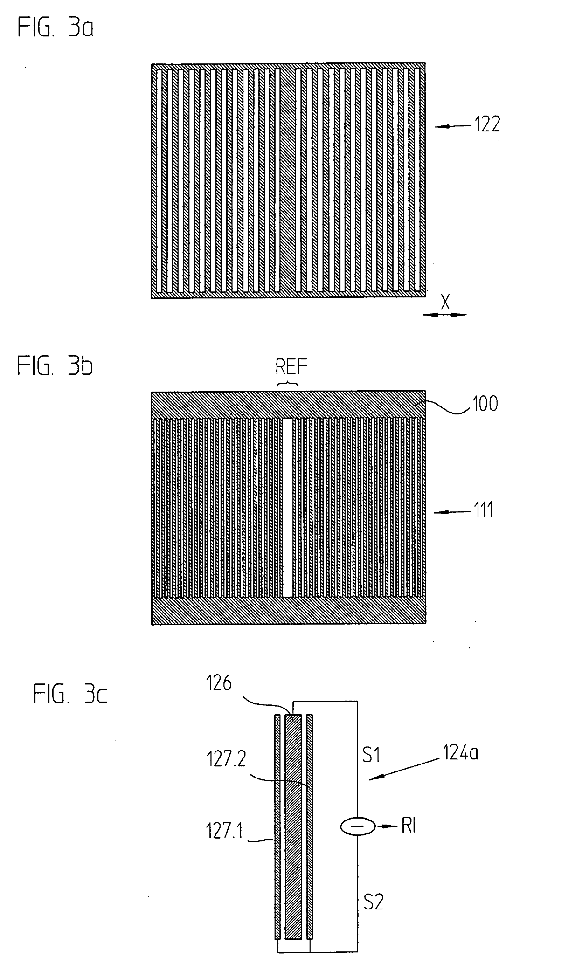

Figur 3a zeigt hierbei die Sendeteilung 122 einer weiteren Ausführungsform der erfindungsgemäßen Positionsmesseinrichtung, in Figur 3b ist ein Teil des abgetasteten Maßstabes 100 mit der Inkrementalteilungsspur 111 inclusive einer Referenzmarkierung REF dargestellt.

Auch dieses Ausführungsbeispiel der Positionsmesseinrichtung ist wiederum als Auflichtsystem ausgebildet, d.h. die alternierend in Messrichtung x angeordneten Teilbereiche der Inkrementalteilungsspur 111 weisen unterschiedliche optische Reflexionseigenschaften auf. Die in Figur 3b hell dargestellten Teilbereiche sind hoch-reflektierend ausgebildete Teilbereiche bzw. Heilfelder, die dunkel dargestellten Teilbereiche repräsentieren gering-reflektierende Dunkelfelder. Die Referenzmarkierung REF an der Referenzposition $x_{REF}$ ist durch ein zusätzliches Hellfeld an dieser Stelle gebildet, wodurch die Periodizität der Inkrementalteilungsspur 111 gestört wird. Die Periodizität $TP_M$ der Inkrementalteilungsspur 111 wird in diesem Beispiel gemäß $TP_M = 20\mu m$ gewählt, die Breite eines Teilbereichs beträgt $10\mu m$. Die Referenzmarkierung REF bzw. das Hellfeld im Maßstab 100 besitzt im vorliegenden Beispiel die Breite $30\mu m$, was der 1,5-fachen Peridizität $TP_M$ der Inkrementalteilungsspur 111 entspricht. Diese Breitenwahl erweist sich als vorteilhaft, da derart die Periodizität der Inkrementalteilungsspur möglichst wenig gestört wird.

Alternativ hierzu kann auch ein Hellfeld der Breite $40\mu m$ ausgestaltet werden, was damit der doppelten Teilungsperiode der Inkrementalteilungsspur entspricht. In diesem Fall erweist es sich als vorteilhaft, wenn das Hellfeld der Referenzmarkierung REF derart in der Inkrementalteilungsspur 111 angeordnet ist, dass in Messrichtung x der Abstand zum nächsten benachbarten Teilungsbereich mit erhöhter Reflektivität bzw. Hellfeld (oder erhöhter Durchlässigkeit im Durchlichtfall) auf dem Maßstab eine maximale Breite einnimmt, wobei die Anzahl der entfallenen Teilungsbereiche mit erhöhter Reflektivität oder erhöhter Durchlässigkeit möglichst minimal gewählt wird. Vorzugsweise beträgt der Abstand des Hellfelds in Messrichtung x zum nächsten benachbarten Teilungsbereich mit erhöhter Reflektivität auf dem Maßstab das 1.5-fache der Teilungsperiode der Inkrementalteilungsspur 111.

Auf Seiten der Sendeteilung 122 ist gemäß Figur 3a eine im wesentlichen periodische Struktur in Messrichtung x vorgesehen, die durch alternierend angeordnete Teilbereiche unterschiedlicher Durchlässigkeit gebildet wird. Die in Figur 3a hell dargestellten Teilbereiche sind optisch durchlässig ausgebildet, die dunkel dargestellten Teilbereiche sind optisch undurchlässig ausgebildet. Die Periodizität $TP_S$ der Sendeteilung 122 beträgt in diesem Beispiel $TP_S = 40\mu m$, die Breite eines Teilbereichs der Sendeteilung 122 entspricht $20\mu m$. Abgestimmt auf die Ausgestaltung der Referenzmarkierung REF auf dem Maßstab 100 wird in diesem Beispiel auf Seiten der Sendeteilung 122 in einem zentralen Bereich ein transparenter Teilbereich weggelassen, d.h. es wird eine Aperiodizität dieser Teilungsstruktur in Form eines zentral angeordneten Dunkelfeldes der Breite $60\mu m$ realisiert, was etwa dem 1.5-fachen der Periodizität $TP_S$ der Sendeteilung 122 entspricht. Eine derartige Wahl der Dunkelfeldbreite erweist sich als vorteilhaft, da derart nur eine minimale Modifikation der ansonsten periodischen Sendeteilung 122 resultiert.

Grundsätzlich könnte die Aperiodizität bzw. das Dunkelfeld in der Sendeteilung 122 alternativ zu Figur 3c auch dezentral angeordnet werden; die mögliche Breite des Dunkelfelds kann im Bereich zwischen $40\mu m$ und $80\mu m$ gewählt werden.

Eine zugehörige Referenzimpulssignal-Detektoreinheit 124a ist in Figur 3c schematisiert dargestellt; die Ausgestaltung derselben entspricht hierbei grundsätzlich derjenigen des erläuterten Ausführungsbeispiels in Figur 2. Die Referenzimpulssignal-Detektoreinheit 124a umfasst wiederum ein zentral angeordnetes Referenzimpulssignal-Detektorelement 126 mit der Breite $b_1 = 35\mu m$, die beiden äußeren Referenzimpulssignal-Detektorelemente 127.1, 127.2 weisen jeweils die Breiten $b_2 = 17,5\mu m$ auf. In der Ebene der - nicht dargestellten - Abtastplatte wird das zentrale Referenzimpulssignal-Detektorelement 126 an der zentrisch gestreckten Position des Maßstab-Helllfelds bzw. der Referenzmarkierung REF angeordnet. Analog zum vorhergehenden Beispiel erfolgt auch wieder die Verschaltung der verschiedenen Referenzimpulssignal-Detektorelemente 126, 127.1, 127.2, um das Referenzimpulssignal RI zu erzeugen.

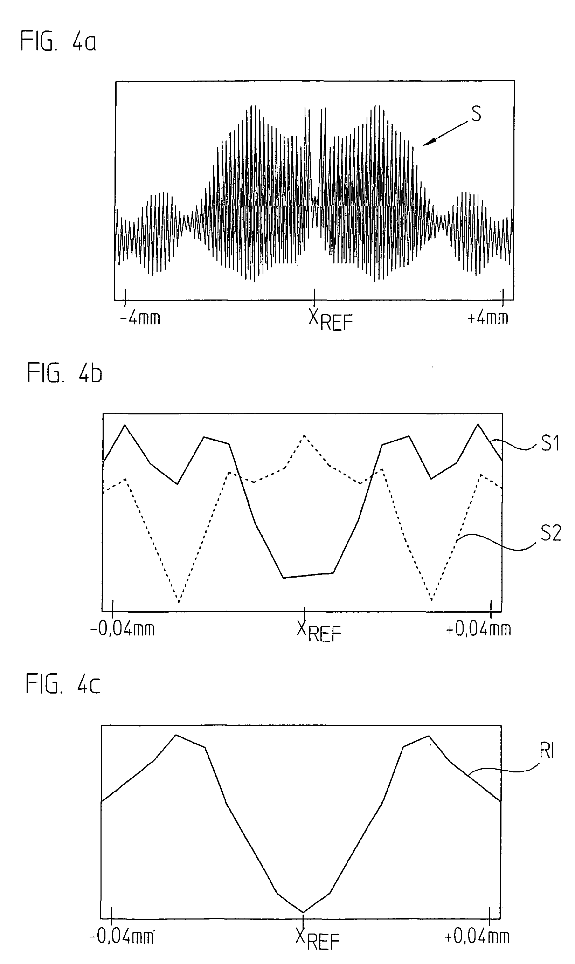

Das aus der Abtastung des Streifenmusters in der Detektionsebene der Abtasteinheit resultierende Gesamt-Abtastsignal S im Bereich +/- 4mm um die Referenzposition $x_{REF}$ ist für ein System mit dem Maßstab 100 und der Sendeteilung 122 aus den Figuren 3a und 3b in Figur 4a dargestellt. Deutlich erkennbar ist in dieser Darstellung hierbei der hochfrequente Inkrementalsignalanteil, der zur hochauflösenden Positionsbestimmung dient. Diesem Signalanteil überlagert bzw. im Bereich der Referenzposition $x_{REF}$ amplitudenmäßig aufgeprägt ist der deutlich niederfrequentere Signalanteil, der von der gestörten Periodizität der Inkrementalteilungsspur 111 in diesem Bereich herrührt. Wenn wie im vorliegenden Fall die Sendeteilung 112 im zentralen Bereich ein Dunkelfeld als Aperiodizität der ansonsten periodischen Sendeteilung aufweist, so resultiert im Gesamt-Abtastsignal S gemäß Figur 4a im Bereich der Referenzposition $x_{REF}$ ein Signaleinbruch in Bezug auf die Einhüllende dieses Signals.

Über die oben erläuterte Ausgestaltung der Referenzimpulssignal-Detektoreinheit 124a lässt sich dieser Signaleinbruch im Gesamt-Abtastsignal S nunmehr in ein ausgangsseitig nutzbares, hochaufgelöstes Referenzimpulssignal RI umsetzen. In Figur 4b ist das Signal S1 aus dem zentralen Referenzimpulssignal-Detektorelement 126 einerseits sowie die resultierenden Signale S2 aus den symmetrisch angeordneten Referenzimpulssignal-Detektorelementen 127.1, 127.2 andererseits im Bereich +/- 0.04mm um die Referenzposition $x_{REF}$ dargestellt. Wie aus Figur 4b erkennbar ist, weisen beide Signale S1, S2 noch eine überlagerte Periodizität in ihrem Amplitudenverlauf auf, der auf den Einfluss der Inkrementalteilungsspur 111 zurückzuführen ist. In Figur 4c ist schließlich das nach der Differenzbildung aus S1 und S2 resultierende Referenzimpulssignal RI dargestellt, das im Bereich +/- 0.04mm um die Referenzposition $x_{REF}$ einen deutlichen Signaleinbruch aufweist. Aufgrund der erfolgten Differenzbildung aus S1 und S2 ist der periodische Anteil des Inkrementalsignals im Referenzimpulssignal RI herausgefiltert worden. Es liegt ein positionsmäßig hochaufgelöstes Referenzimpulssignal RI vor, das in bekannter Art und Weise von einer Folgeelektronik weiterverarbeitbar ist. Über die erfindungsgemäße Ausgestaltung der Referenzimpulssignal-Detektoreinheit 124a wurde aus dem in Figur 4a gezeigten Gesamt-Abtastsignal S das hochaufgelöste Referenzimpulssignal RI herausgefiltert.

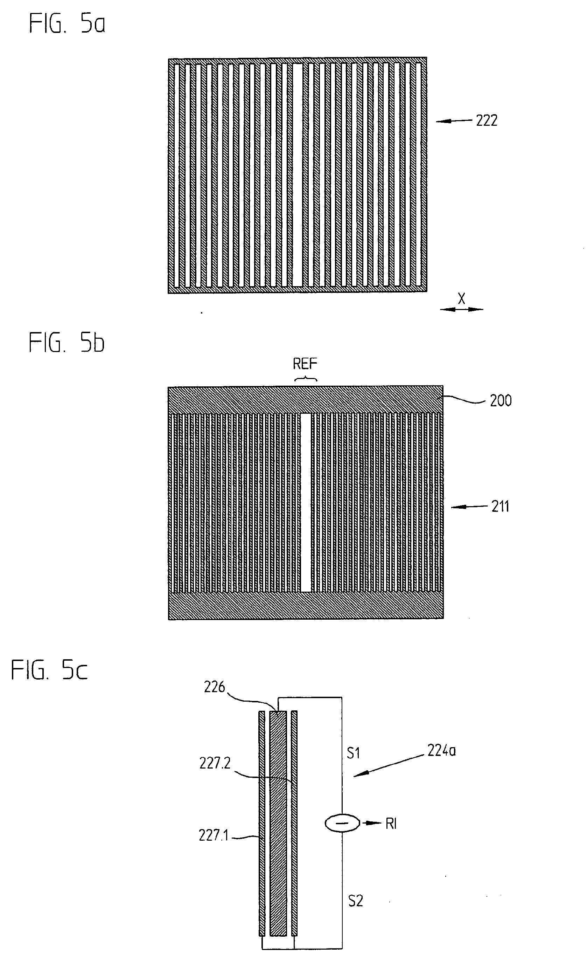

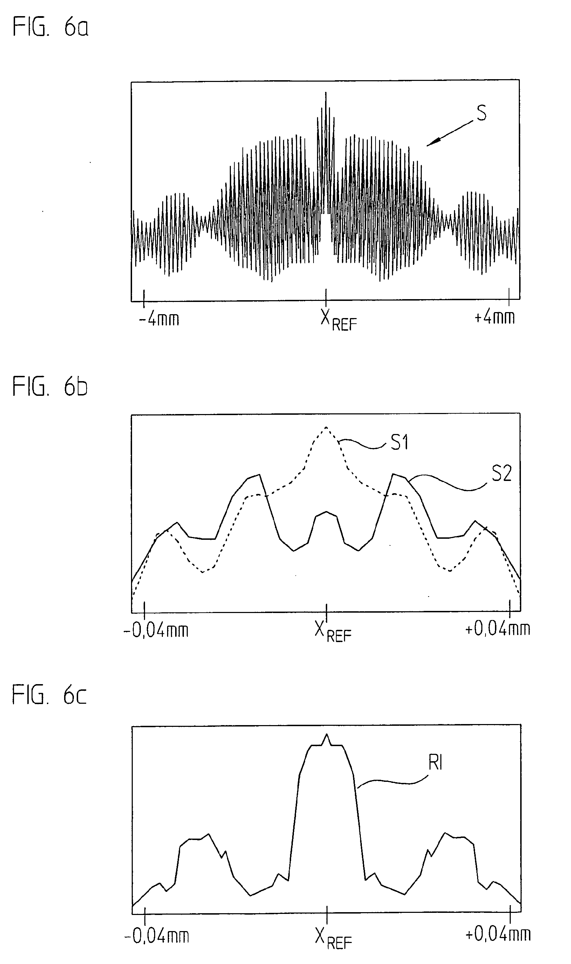

Ein weiteres Ausführungsbeispiel zur Ausgestaltung einer Sendeteilung, eines Maßstabs, der zugehörigen Referenzimpulssignal-Detektoreinheit sowie die verschiedenen Signalverläufe ist in den Figuren 5a - 5c und 6a - 6c analog zum vorhergehenden Beispiel dargestellt. In der nachfolgenden Beschreibung dieser Figuren seien lediglich die maßgeblichen Unterschiede zum vorherigen Beispiel erläutert.

Während hierbei die Ausgestaltung des Maßstabs 200 mit der Inkrementalteilungsspur 211 und der Referenzmarkierung identisch zum vorhergehenden Beispiel gewählt ist, unterscheidet sich wie in Figur 5a dargestellt die eingesetzte Sendeteilung 222 hiervon. So ist nunmehr vorgesehen, in einem zentralen Bereich der Sendeteilung 222 ein in Messrichtung x verbreitertes Hellfeld mit der Breite 60μm auszubilden. Dies erfolgt durch Weglassen mindestens eines undurchlässigen Teilbereiches dieser Teilungsstruktur. Die Breite eines geeigneten Hellfeldes in der Sendeteilung kann im Bereich zwischen 36μm und 110μm gewählt werden. Die Periodizität $TP_S$ der Sendeteilung 222 beträgt wie im vorherigen Beispiel $TP_S$ = 40μm, die Breite eines Teilbereichs in Messrichtung x beträgt 20μm.

Identisch zum vorherigen Beispiel sind der Maßstab 200 sowie die Referenzimpulssignal-Detektoreinheit 224a ausgebildet.

Wie aus Figur 6a ersichtlich ist, resultiert aufgrund der unterschiedlichen Ausgestaltung der Sendeteilung 222 an der Referenzposition $x_{REF}$ nunmehr ein Signalmaximum der Einhüllenden des Gesamt-Abtastsignals S; im vorherigen Beispiel lag an dieser Stelle ein Signaleinbruch vor.

Ebenso äußert sich dies in den Signalen S1 und S2 sowie im resultierenden Referenzimpulssignal RI, wie dies in den Figuren 6b und 6c dargestellt ist. Das heißt, die Referenzposition $x_{REF}$ wird im Referenzimpulssignal RI in diesem Beispiel durch einen deutlichen Signalanstieg markiert. Analog zum vorherigen Beispiel ist aber wiederum aus Figur 6c erkennbar, dass aufgrund der erfindungsgemäßen Maßnahmen auf der Detektorseite eine Filterung des periodischen Inkrementalsignalanteils am Referenzimpulssignal RI erfolgt.

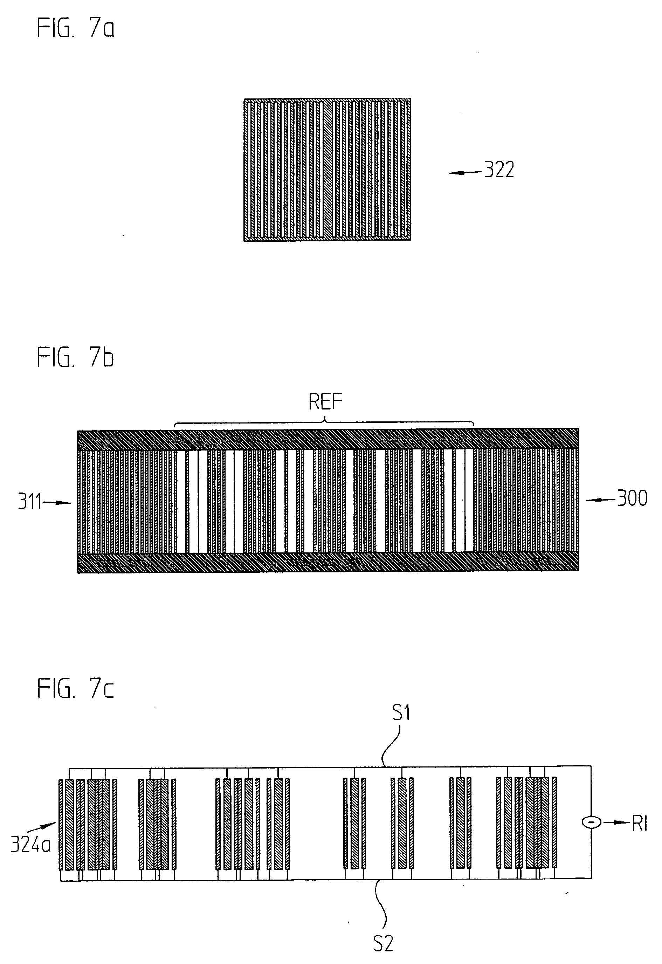

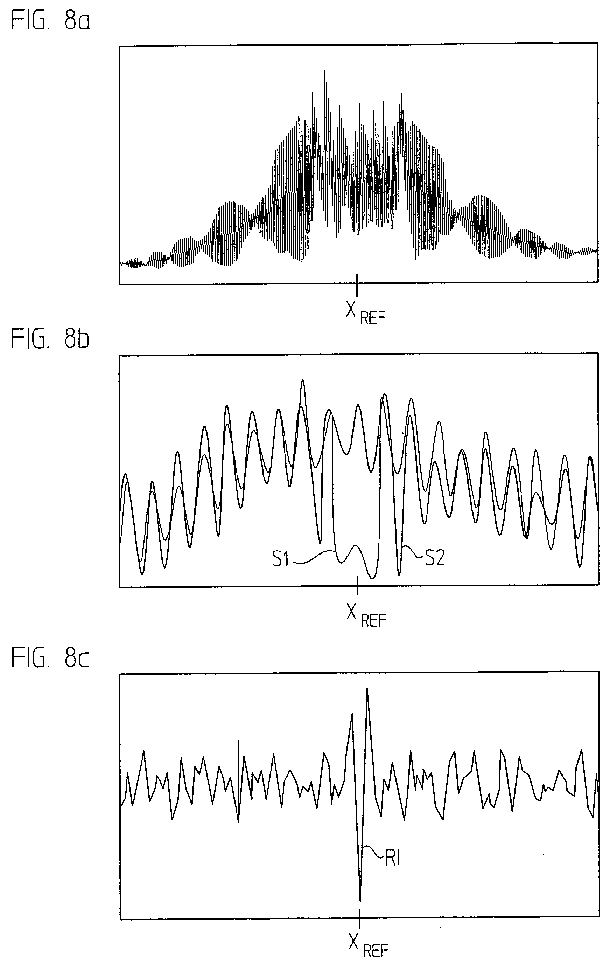

Eine weitere Variante zur erfindungsgemäßen Erzeugung eines Referenzimpulssignals sei nachfolgend anhand der Figuren 7a - 7c sowie 8a - 8c erläutert. Die Darstellung der verschiedenen Komponenten der Positionsmesseinrichtung, die zur Erzeugung eines Referenzimpulssignals maßgeblich sind sowie die Darstellung der verschiedenen Signale entspricht wiederum den Darstellungen der vorherigen beiden Beispiele. Nachfolgend seien deshalb im wesentlichen nur die Unterschiede dieser Ausführungsform erläutert.

Wesentlich ist bei diesem Beispiel, wie aus Figur 7b mit der Maßstabdarstellung ersichtlich, dass in die Inkrementalteilungsspur 311 des Maßstabs 300 nunmehr nicht nur ein einziges Hellfeld als Referenzmarkierung REF integriert ist, sondern eine Vielzahl derartiger Hellfelder. Insgesamt umfasst die Referenzmarkierung dieses Ausführungsbeispiels insgesamt eine sich in Messrichtung x erstreckende Verteilung von 14 Hellfeldern bzw. hoch-reflektierenden Teilbereichen, die jeweils aus dem Weglassen eines nicht-reflektierenden Teilbereichs der Inkrementalteilungsspur 311 resultieren - wie oben erläutert wurde. Jedes einzelne Hellfeld besitzt wie oben erläutert eine Breite in Messrichtung x von 30μm oder 40μm, die Inkrementalteilungsspur 311 besitzt ebenfalls wie in den vorangehenden Beispielen eine Periodizität bzw. Teilungsperiode $TP_M$ = 20μm mit einer Teilbereichs-Breite von 10μm.

Identisch zum Ausführungsbeispiel aus der Figur 3a ist die Sendeteilung 322 dieses Ausführungsbeispiels ausgebildet, die wiederum in Figur 7a dargestellt ist. Dies bedeutet, dass diese eine Aperiodizität in Form eines zentral angeordneten Dunkelfelds aufweist. Ansonsten sei auf die oben angegebenen Daten dieser Teilung verwiesen.

Abgestimmt ausgebildet auf die nunmehr vorgesehene Vielzahl von Hellfeldern der Referenzmarkierung REF des Maßstabs 300 ist in diesem Beispiel nunmehr die Detektionsseite, die anhand von Figur 7c erläutert sei. So sind zur Erfassung des Referenzimpulssignals insgesamt 14 Einheiten einzelner Referenzimpulssignal-Detektoreinheiten vorgesehen, wie sie jeweils in den vorhergehenden Beispielen zur Detektion eines einzelnen Hellfeldes in der Inkrementalteilungsspur erforderlich waren. Jede einzelne der Referenzimpulssignal-Detektoreinheiten ist hierbei identisch wie eine einzelne Einheit der vorhergehenden Beispiele ausgebildet und besteht aus einem zentralen Referenzimpulssignal-Detektorelement sowie zwei symmetrisch hierzu angeordneten Referenzimpulssignal-Detektorelementen. Wie aus Figur 7c ersichtlich, werden die aus der Abtastung des Streifenmusters resultierenden Signale der zentralen Referenzimpulssignal-Detektorelemente zum Signal S1 zusammengeführt, die Signale der jeweils außen liegenden Referenzimpulssignal-Detektorelemente zum Signal S2. Die Signale S1 und S2 werden wiederum in Differenz verschaltet, als Differenzsignal resultiert das Referenzimpulssignal RI.

In Figur 8a ist analog zu den vorherigen Beispielen das aus der Abtastung resultierende Gesamtsignal S im Bereich +/- 4mm um die Referenzposition $x_{REF}$ dargestellt; in Figur 8b sind die Signale S1, S2 aus der Vielzahl von Detektorelement-Einheiten im Bereich +/- 0.2mm um die Referenzposition $x_{REF}$ dargestellt. Figur 8c zeigt schließlich das resultierende Differenzsignal bzw. das ausgangsseitige Referenzimpulssignal RI, bei dem aufgrund der erfindungsgemäßen Maßnahmen eine deutliche Reduzierung des Einflusses resultiert.

Wird eine derartige Ausgestaltung mit mehreren Referenzimpulssignal-Detektoreinheiten gewählt, so sind diese wie aus Figur 7c ersichtlich in Messrichtung x über einen bestimmten Bereich verteilt angeordnet. Zwischen benachbarten Referenzimpulssignal-Detektoreinheiten ist hierbei z.T. noch verfügbarer Platz in Form von Zwischenbereichen vorhanden. Diese Zwischenbereiche können etwa genutzt werden, um dort noch zusätzlich Inkrementalsignal-Detektorelemente anzuordnen.

Diese Variante mit einer Vielzahl von Hellfeldern in der Referenzmarkierung ist vorteilhaft zur Steigerung der Effizienz bzw. des Nutzanteils des zu erzeugenden Referenzimpulssignales.

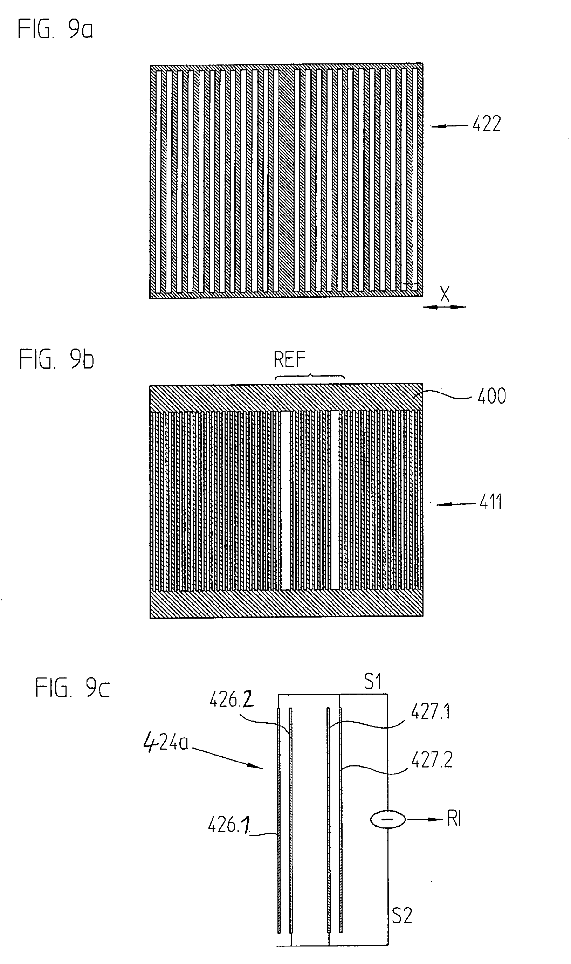

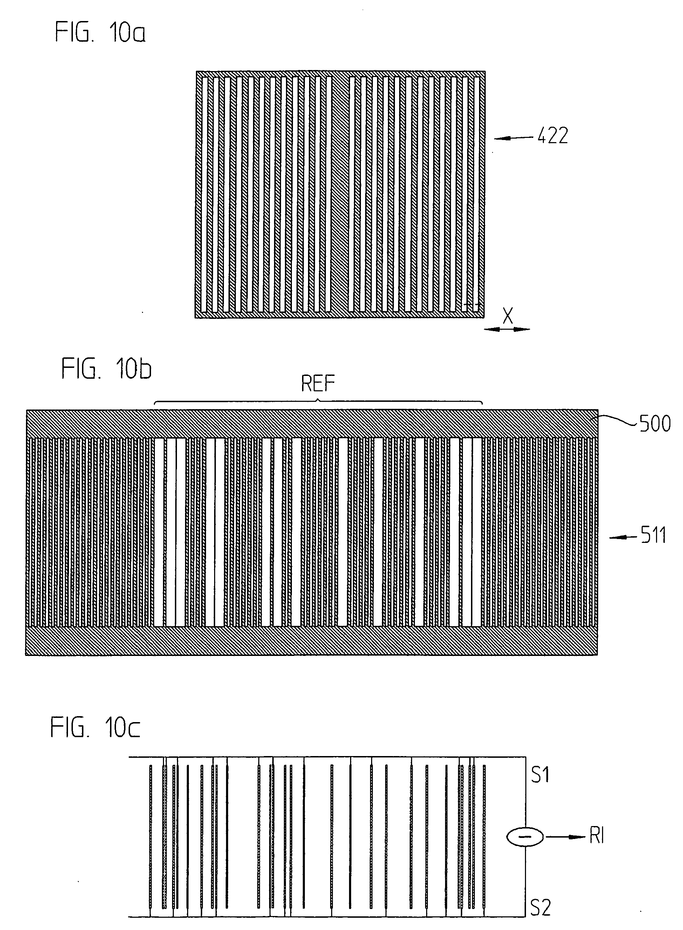

Weitere Referenzimpulssignal-Detektoreinheiten inclusive der zugehörigen Strukturen auf dem Maßstab und dem Sendegitter seien abschließend anhand der nachfolgenden Figuren 9a - 9c sowie 10a - 10c erläutert.

In den Figuren 9a - 9c zeigt Figur 9b einen Teil der abgetasteten Inkrementalteilungsspur 411 auf dem Maßstab 400. Die Referenzmarkierung REF wird durch zwei Hellfelder gebildet, d.h. durch Teilbereiche erhöhter Reflektivität im Fall der Auflichtabtastung bzw. erhöhter Durchlässigkeit im Fall der Durchlichtabtastung. Identisch zu den vorherigen Beispielen ist die in Figur 9a dargestellte Sendeteilung 422 ausgebildet.

Eine zur Abtastung dieser Referenzmarkierung REF geeignete Referenzimpulssignal-Detektoreinheit 424a ist in Figur 9c dargestellt. Diese besteht aus zwei Paaren von Referenzimpulssignal-Detektorelementen 426.1, 426.2 und 427.1, 427.2. Der Abstand der Referenzimpulssignal-Detektorelemente 426.1, 426.2, 427.1, 427.2 beträgt innerhalb jedes Paares jeweils $SP_{INC}$ und entspricht damit der Signalperiode des Inkrementalsignals bzw. der entsprechenden Streifenmusterperiode in der Detektionsebene. Die beiden Referenzimpulssignal-Detektorelemente 426.1, 426.2 oder 427.1, 427.2 eines Paares liefern gegenphasige bzw. um 180° phasenversetzte Abtastsignale S1 und S2, die in Differenz verschaltet werden, so dass ausgangsseitig das Referenzimpulssignal RI resultiert. Zu erwähnen ist ferner noch, dass die Abfolge der einzelnen Referenzimpulssignal-Detektorelemente, die phasenverschiedene Abtastsignale S1, S2 liefern, sich in Messrichtung x von benachbartem Paar zu benachbartem Paar ändert bzw. umkehrt. So ist in der Figur von links ausgehend zunächst das Referenzimpulssignal-Detektorelement 426.1 angeordnet, das das Signal S1 liefert, dann folgt in diesem Paar das Referenzimpulssignal-Detektorelement 426.2, welches das Signal S2 erzeugt. Genau umgekehrt hierzu ist im nächsten Paar von Referenzimpulssignal-Detektorelementen zunächst dasjenige Referenzimpulssignal-Detektorelement 427.1 angeordnet, das das Signal S2 liefert, dann erst folgt das Referenzimpulssignal-Detektorelement 427.2 zur Erzeugung des Signals S1 usw.. Auf diese Art und Weise resultiert über die gesamte Anordnung von Referenzimpulssignal-Detektorelementen hinweg eine Symmetrie, die Fehler im Abtastsignal herausmittelt.

Diese Variante lässt sich ferner zu einer optischen Positionsmesseinrichtung ausbauen, die ein Vielzahl derartiger Hellfelder in der Inkrementalteilungsspur vorsieht. Darstellungen der Sendeteilung 422, des Maßstabs 500 mit der integrierten Referenzmarke REF in der Inkrementalteilungsspur 511 sowie die zugehörige Detektoranordnung sind in den Figuren 10a - 10c veranschaulicht. Ergänzend zu den Ausführungen zum vorherigen Beispiel sei lediglich nochmals auf die alternierende Abfolge der Referenzimpulssignal-Detektorelemente in benachbarten Paaren hingewiesen. So liefern die Referenzimpulssignal-Detektorelemente des von links aus ersten Paares S2- und S1-Signale, das nachfolgende Paar S1- und S2-Signale usw.. Auch in diesem Beispiel wird durch diese Anordnung eine Gesamtsymmetrie der Detektoranordnung gewährleistet.

Neben den erläuterten Ausführungsbeispielen gibt es im Rahmen der vorliegenden Erfindung selbstverständlich auch noch alternative Ausführungsformen.


**Patentansprüche**

1. Positionsmesseinrichtung zur Erzeugung positionsabhängiger Abtastsignale, bestehend aus einem Maßstab (10) und einer Abtasteinheit (20), die relativ zueinander in einer Messrichtung (x) beweglich angeordnet sind, wobei

- der Maßstab (10) mindestens eine Inkrementalteilungsspur (11; 111; 211; 311) umfasst, die sich in der Messrichtung (x) erstreckt und im wesentlichen aus einer periodischen Anordnung von Teilungsbereichen (12a, 12b) mit unterschiedlichen optischen Eigenschaften besteht und an mindestens einer Referenzposition ($x_{REF}$) eine Referenzmarkierung (REF) aufweist, die aus einer aperiodischen Anordnung von Teilungsbereichen (12a, 12b) besteht,

- die Abtasteinheit (20) eine Lichtquelle (21) ohne vorgeordnete Kollimationsoptik sowie eine optoelektronische Detektoranordnung umfasst, die mindestens eine Referenzimpulssignal-Detektoreinheit (24a, 24b; 124a; 224a; 324a) aufweist, die zur Erzeugung eines Referenzimpulssignals (RI) auf die Referenzmarkierung (REF) abgestimmt ist und wobei in der Detektionsebene ein periodisches Streifenmuster resultiert, das im Bereich der Referenzposition ($x_{REF}$) amplitudenmoduliert ist,

**dadurch gekennzeichnet, dass**

die Referenzimpulssignal-Detektoreinheit (24a, 24b; 124a; 224a; 324a) aus mehreren Referenzimpulssignal-Detektorelementen (26, 27.1, 27.2; 126, 127.1, 127.2; 226, 227.1, 227.2) besteht, die derart dimensioniert und zur Erzeugung eines Referenzimpulssignals (RI) verschaltet sind, dass diese als Bandpassfilter auf das amplitudenmodulierte Streifenmuster an der Referenzposition ($x_{REF}$) wirken und ausgangsseitig ein Referenzimpulssignal (RI) vorliegt, bei dem der periodische Signalbeitrag aus der Inkrementalteilungsspur (11; 111; 211; 311) sowie niederfrequente Signalanteile weitgehend herausgefiltert sind, wobei die Referenzimpulssignal-Detektoreinheit (24a, 24b; 124a; 224a; 324a) ein zentral angeordnetes Referenzimpulssignal-Detektorelement (26; 126; 226) und zwei hierzu symmetrisch in Messrichtung (x) angeordnete Referenzimpulssignal-Detektorelemente (27.1, 27.2; 127.1, 127.2, 227.1, 227.2) umfasst, die um N * 360° phasenversetzte Abtastsignale (N = 1, 2, ...) zum zentralen Referenzimpulssignal-Detektorelement (26; 126; 226) erzeugen und das zentral angeordnete Referenzimpulssignal-Detektorelement (26; 126; 226) einerseits und die zwei symmetrisch hierzu angeordneten Referenzimpulssignal-Detektorelemente (27.1, 27.2; 127.1, 127.2; 227.1, 227.2) andererseits in Differenz verschaltet sind und das Differenzsignal das Referenzimpulssignal (RI) darstellt.

2. Positionsmesseinrichtung nach Anspruch 1, **dadurch gekennzeichnet, dass** die Breite ($b_1$) des zentral angeordneten Referenzimpulssignal-Detektorelements (26; 126; 226) doppelt so groß wie die Breite ($b_2$) eines der beiden symmetrisch hierzu angeordneten Referenzimpulssignal-Detektorelemente (27.1, 27.2; 127.1, 127.2; 227.1, 227.2) gewählt ist.

3. Positionsmesseinrichtung nach Anspruch 2, **dadurch gekennzeichnet, dass** die Breite ($b_1$) des zentral angeordneten Referenzimpulssignal-Detektorelements (26; 126; 226) gleich einer Signalperiode ($SP_{INC}$) des Inkrementalsignals (INC) gewählt ist.

4. Positionsmesseinrichtung nach Anspruch 1, **dadurch gekennzeichnet, dass** der Abstand (d) des zentral angeordneten Referenzimpulssignal-Detektorelements (26; 126, 226) von den benachbarten Referenzimpulssignal-Detektorelementen (27.1, 27.2; 127.1, 127.2; 227.1, 227.2) gemäß

$$d = \frac{SP_{INC}}{2\pi} * \arccos\left[\frac{1}{2\eta} \frac{\sin\left(\pi b_1 / SP_{INC}\right)}{\sin\left(\pi b_2 / SP_{INC}\right)}\right] - z SP_{INC}$$

gewählt ist, mit

z: ganze Zahl
$SP_{INC}$: Signalperiode des Inkrementalsignals
$b_1$: Breite des zentralen Referenzimpulssignal-Detektorelements
$b_2$: Breite eines äußeren Referenzimpulssignal-Detektorelements

5. Positionsmesseinrichtung nach Anspruch 1, **dadurch gekennzeichnet, dass** der Abstand (d) des zentral angeordneten Referenzimpulssignal-Detektorelements (26; 126, 226) von den benachbarten Referenzimpulssignal-Detektorelementen (27.1, 27.2; 127.1, 127.2; 227.1, 227.2) gemäß

$$d = n * SP_{INC} + 0.5\, b_2$$

oder

$$d = n * SP_{INC} - 0.5\, b_2$$

gewählt ist, mit:

SP$_{INC}$: Signalperiode des Inkrementalsignals
$b_2$: Breite eines äußeren Referenzimpulssignal-Detektorelements
n: 0, 1, 2, 3, .......

**6.** Positionsmesseinrichtung nach Anspruch 1, **dadurch gekennzeichnet, dass** im Bereich der Referenzmarkierung (REF) in die Inkrementalteilungsspur (11; 111; 211; 311) mindestens ein Hellfeld integriert ist, das die Periodizität der Inkrementalteilungsspur (11; 111; 211; 311) stört und wobei das Hellfeld aus einem Teilungsbereich (12b) mit erhöhter Reflektivität oder erhöhter Durchlässigkeit besteht.

**7.** Positionsmesseinrichtung nach Anspruch 6, **dadurch gekennzeichnet, dass** das Hellfeld in Messrichtung (x) eine Breite aufweist, die der doppelten Teilungsperiode (TP$_M$) der Inkrementalteilungsspur (11; 111; 211; 311) oder dem 1,5-fachen der Teilungsperiode (TP$_M$) der Inkrementalteilungsspur (11; 111; 211; 311) entspricht.

**8.** Positionsmesseinrichtung nach Anspruch 6, **dadurch gekennzeichnet, dass** das Hellfeld derart angeordnet ist, dass in Messrichtung (x) der Abstand zum nächsten benachbarten Teilungsbereich (12b) mit erhöhter Reflektivität oder erhöhter Durchlässigkeit auf dem Maßstab (10; 100; 200; 300) eine maximale Breite einnimmt, wobei die Anzahl der entfallenen Teilungsbereiche mit erhöhter Reflektivität oder erhöhter Durchlässigkeit möglichst minimal gewählt wird.

**9.** Positionsmesseinrichtung nach Anspruch 8, **dadurch gekennzeichnet, dass** der Abstand des Hellfelds in Messrichtung (x) zum nächsten benachbarten Teilungsbereich (12b) mit erhöhter Reflektivität oder erhöhter Durchlässigkeit auf dem Maßstab (10; 100; 200; 300) das 1.5-fache der Teilungsperiode (TP$_M$) der Inkrementalteilungsspur (11; 111; 211; 311) beträgt.

**10.** Positionsmesseinrichtung nach Anspruch 6, **dadurch gekennzeichnet, dass** die Referenzmarkierung (REF) in der Inkrementalteilungsspur (311) mehrere in Messrichtung (x) verteilt angeordnete Hellfelder umfasst.

**11.** Positionsmesseinrichtung nach Anspruch 1 oder 6, **dadurch gekennzeichnet, dass** die Detektoranordnung zur Erzeugung eines Referenzimpulssignals (RI) mehrere, in Messrichtung (x) beabstandet zueinander angeordnete Referenzimpulssignal-Detektoreinheiten (324a) umfasst.

**12.** Positionsmesseinrichtung nach Anspruch 11, **dadurch gekennzeichnet, dass** die Referenzimpulssignal-Detektoreinheiten (324a) jeweils identisch ausgebildet sind.

**13.** Positionsmesseinrichtung nach mindestens einem der vorangehenden Ansprüche, **dadurch gekennzeichnet, dass** auf Seiten der Abtasteinheit (20) der Lichtquelle (21) eine im wesentlichen periodische Sendeteilung (22; 122; 222, 322) mit durchlässigen und undurchlässigen Teilungsbereichen vorgeordnet ist, die mindestens einen auf die Referenzmarkierung (REF) abgestimmten Bereich mit einer aperiodischen Teilungsstruktur aufweist.

**14.** Positionsmesseinrichtung nach Anspruch 13, **dadurch gekennzeichnet, dass** im Bereich der Sendeteilung (22; 122; 222; 322) mit der aperiodischen Teilungsstruktur mindestens einer der durchlässigen oder undurchlässigen Teilungsbereiche nicht vorhanden ist.

**15.** Positionsmesseinrichtung nach Anspruch 14, **dadurch gekennzeichnet, dass** im Bereich der Sendeteilung (22; 122; 222; 322) mit der aperiodischen Teilungsstruktur genau einer der durchlässigen oder undurchlässigen Teilungsbereiche nicht vorhanden ist.

16. Positionsmesseinrichtung nach mindestens einem der vorangehenden Ansprüche, **dadurch gekennzeichnet, dass** die Abtasteinheit (20) eine Abtastplatte (25) umfasst, bei der

- in einem zentralen Bereich die Sendeteilung (22) angeordnet ist,
- benachbart zur Sendeteilung (22) Inkrementalsignal-Detektorelemente angeordnet sind und
- senkrecht zur Messrichtung (x) benachbart zur Sendeteilung (22) mindestens eine Referenzimpulssignal-Detektoreinheit (24a, 24b) angeordnet ist.

17. Positionsmesseinrichtung nach Anspruch 16, **dadurch gekennzeichnet, dass** auf der Abtastplatte (25) mehrere Referenzimpulssignal-Detektoreinheiten angeordnet sind und zwischen den Referenzimpulssignal-Detektorelementen ferner noch Inkrementalsignal-Detektorelemente angeordnet sind.

18. Positionsmesseinrichtung nach Anspruch 13, **dadurch gekennzeichnet, dass** die Lichtquelle (21) als räumlich ausgedehnte Lichtquelle ausgebildet ist.

19. Positionsmesseinrichtung nach Anspruch 1, **dadurch gekennzeichnet, dass** die Lichtquelle als Punktlichtquelle ausgebildet ist.

20. Positionsmesseinrichtung nach Anspruch 1, **dadurch gekennzeichnet, dass** die Lichtquelle als Array von Punktlichtquellen ausgebildet ist, die senkrecht zur Messrichtung angeordnet sind.

**Claims**

1. Position measuring device for generating position-dependent scanning signals, consisting of a scale (10) and a scanning unit (20) which are arranged movably relative to one another in a measuring direction (x),

- the scale (10) comprising at least one incremental graduation track (11; 111; 211; 311) which extends in the measuring direction (x) and consists essentially of a periodic arrangement of graduation regions (12a, 12b) with different optical properties, and has at at least one reference position ($x_{REF}$) a reference mark (REF) which consists of an aperiodic arrangement of graduation regions (12a, 12b),
- the scanning unit (20) comprising a light source (21) without upstream collimation optics and an opto-electronic detector arrangement which has at least one reference pulse signal detector unit (24a, 24b; 124a; 224a; 324a) which is tuned to the reference mark (REF) in order to generate a reference pulse signal (RI), and there being as a result an the detection plane a periodic stripe pattern which is amplitude-modulated in the region of the reference position ($x_{REF}$),

**characterized in that**
the reference pulse signal detector unit (24a, 24b; 124a; 224a; 324a) consists of a plurality of reference pulse signal detector elements (26, 27.1, 27.2; 126, 127.1, 127.2; 226, 227.1, 227.2) which are dimensioned in such a way and interconnected in such a way, in order to generate a reference pulse signal (RI), that said elements act as bandpass filter on the amplitude-modulated stripe pattern at the reference position ($x_{REF}$), and there is present on the output side a reference pulse signal (RI) in the case of which the periodic signal contribution from the incremental graduation track (11; 111; 211; 311) and low-frequency signal components are substantially filtered out, the reference pulse signal detector unit (24a, 24b; 124a; 224a; 324a) comprising a centrally arranged reference pulse signal detector element (26; 126; 226) and two reference pulse signal detector elements (27.1, 27.2; 127.1, 127.2, 227.1, 227.2) which are arranged symmetrically in the measuring direction (x) in relation to said detector element and generate scanning signals phase-shifted by N * 360° (N = 1, 2, ...) in relation to the central reference pulse signal detector element (26; 126; 226), and the centrally arranged reference pulse signal detector element (26; 126; 226), on the one hand, and the two reference pulse signal detector elements (27.1, 27.2; 127.1, 127.2; 227.1, 227.2) arranged symmetrically in relation to said detector element, on the other hand, are differentially connected, and the difference signal represents the reference pulse signal (RI).

2. Position measuring device according to Claim 1, **characterized in that** the width ($b_1$) of the centrally arranged reference pulse signal detector element (26; 126; 226) is selected to be twice as large as the width ($b_2$) of one of the two reference pulse signal detector elements (27.1, 27.2; 127.1, 127.2; 227.1, 227.2) arranged symmetrically in relation to said detector element.

3. Position measuring device according to Claim 2, **characterized in that** the width ($b_1$) of the centrally arranged reference pulse signal detector element (26; 126; 226) is selected to be equal to a signal period (SP$_{INC}$) of the incremental signal (INC).

4. Position measuring device according to Claim 1, **characterized in that** the distance (d) of the centrally arranged reference pulse signal detector element (26; 126, 226) from the adjacent reference pulse signal detector elements (27.1, 27.2; 127.1, 127.2; 227.1, 227.2) is selected in accordance with

$$ d = \frac{SP_{INC}}{2\pi} * \arccos \left[ \frac{1}{2\eta} \frac{\sin\left( \pi b_1 / SP_{INC} \right)}{\sin\left( \pi b_2 / SP_{INC} \right)} \right] - z SP_{INC} $$

where

z is a whole number
SP$_{INC}$ is the signal period of the incremental signal
b$_1$ is the width of the central reference pulse signal detector element
b$_2$ is the width of an outer reference pulse signal detector element.

5. Position measuring device according to Claim 1, **characterized in that** the distance (d) of the centrally arranged reference pulse signal detector element (26; 126; 226) from the adjacent reference pulse signal detector elements (27.1, 27.2; 127.1, 127.2; 227.1, 227.2) is selected in accordance with

$$ d = n * SP_{INC} + 0.5\, b_2 $$

or

$$ d = n * SP_{INC} - 0.5\, b_2 \,, $$

where:

SP$_{INC}$ is the signal period of the incremental signal
b$_2$ is the width of an outer reference pulse signal detector element
n is 0, 1, 2, 3, ...

6. Position measuring device according to Claim 1, **characterized in that** in the region of the reference mark (REF) there is integrated into the incremental graduation track (11; 111; 211; 311) at least one bright field which interferes with the periodicity of the incremental graduation track (11; 111; 211; 311), the bright field consisting of a graduation region (12b) with increased reflectivity or increased permeability.

7. Position measuring device according to Claim 6, **characterized in that** in the measuring direction (x) the bright field has a width which corresponds to twice the graduation period (TP$_M$) of the incremental graduation track (11; 111; 211; 311) or 1.5 times the graduation period (TP$_M$) of the incremental graduation track (11; 111; 211; 311).

8. Position measuring device according to Claim 6, **characterized in that** the bright field is arranged in such a way that in the measuring direction (x) the distance to the next adjacent graduation region (12b) with increased reflectivity or increased permeability occupies a maximum width on the scale (10; 100; 200; 300), the number of the omitted graduation regions with increased reflectivity or increased permeability being selected to be as minimal as possible.

9. Position measuring device according to Claim 8, **characterized in that** the distance of the bright field in the measuring direction (x) to the next adjacent graduation region (12b) with increased reflectivity or increased permeability on the scale (10; 100; 200; 300) is 1.5 times the graduation period ($TP_M$) of the incremental graduation track (11; 111; 211; 311).

10. Position measuring device according to Claim 6, **characterized in that** the reference mark (REF) in the incremental graduation track (311) comprises a plurality of bright fields arranged distributed in the measuring direction (x).

11. Position measuring device according to Claim 1 or 6, **characterized in that** the detector arrangement for generating a reference pulse signal (RI) comprises a plurality of reference pulse signal detector units (324a) arranged spaced apart from one another in the measuring direction (x).

12. Position measuring device according to Claim 11, **characterized in that** the reference pulse signal detector units (324a) are respectively identically designed.

13. Position measuring device according to at least one of the preceding claims, **characterized in that** arranged upstream on sides of the scanning unit (20) of the light source (21) is a substantially periodic transmitting graduation (22; 122; 222, 322) with permeable and impermeable graduation regions which has at least one region, tuned to the reference mark (REF), with an aperiodic graduation structure.

14. Position measuring device according to Claim 13, **characterized in that** at least one of the permeable or impermeable graduation regions is not present in the region of the transmitting graduation (22; 122; 222; 322) with the aperiodic graduation structure.

15. Position measuring device according to Claim 14, **characterized in that** exactly one of the permeable or impermeable graduation regions is not present in the region of the transmitting graduation (22; 122; 222; 322) with the aperiodic graduation structure.

16. Position measuring device according to at least one of the preceding claims, **characterized in that** the scanning unit (20) comprises a scanning plate (25), in the case of which

   - the transmitting graduation (22) is arranged in a central region,
   - incremental signal detector elements are arranged adjacent to the transmitting graduation (22) and
   - at least one reference pulse signal detector unit (24a, 24b) is arranged adjacent to the transmitting graduation (22) and perpendicular to the measuring direction (x).

17. Position measuring device according to Claim 16, **characterized in that** a plurality of reference pulse signal detector units are arranged on the scanning plate (25) and, furthermore, incremental signal detector elements are also arranged between the reference pulse signal detector elements.

18. Position measuring device according to Claim 13, **characterized in that** the light source (21) is designed as a spatially extended light source.

19. Position measuring device according to Claim 1, **characterized in that** the light source is designed as a point light source.

20. Position measuring device according to Claim 1, **characterized in that** the light source is designed as an array of point light sources which are arranged perpendicular to the measuring direction.

**Revendications**

1. Dispositif de mesure de position destiné à générer des signaux de balayage dépendant de la position, constitué d'une échelle de mesure (10) et d'une unité de balayage (20) qui sont disposées de manière mobile l'une par rapport à l'autre dans une direction de mesure (x), dans lequel

   - l'échelle de mesure (10) comprend au moins une piste de division incrémentale (11 ; 111 ; 211 ; 311) qui s'étend dans la direction de mesure (x) et qui est essentiellement constituée d'un agencement périodique de régions de division (12a, 12b) ayant des propriétés optiques différentes et qui comporte un marquage de préférant (REF) à au moins une position de référence ($x_{REF}$), lequel marquage de référence est constitué d'un agencement apériodique de région de division (12a, 12b),

- l'unité de balayage (20) comprend une source de lumière (21) sans optique de collimation disposée en amont ainsi qu'un dispositif détecteur optoélectronique comportant au moins une unité de détection de signal impulsionnel de référence (24a, 24b ; 124a ; 224a, 324a) qui est apte à générer un signal impulsionnel de référence (RI) sur le marquage de référence (REF) et dans lequel il en résulte dans le plan de détection un motif de franges périodique qui est modulé en amplitude dans la région de la position de référence ($x_{REF}$), **caractérisé en ce que** l'unité de détection de signal impulsionnel de référence (24a, 24b ; 129a ; 224a, 324a) est constituée de plusieurs éléments détecteurs de signaux impulsionnels de référence (26, 27.1, 27.2 ; 126, 127.1, 127.2 ; 226, 227.1, 227.2) qui sont dimensionnés et connectés afin de générer un signal impulsionnel de référence (RI) de manière à ce qu'ils agissent en tant que filtre passe-bande sur le motif de franges modulé en amplitude à la position de référence ($x_{REF}$) et **en ce qu'**un signal impulsionnel de référence (RI) soit présent en sortie, dans lequel la composante de signal périodique provenant de la piste de division incrémentale (11 ; 111 ; 211 ; 311) ainsi que des parties de signal à basse fréquence sont notablement éliminées par filtrage, dans lequel l'unité de détection de signal impulsionnel de référence (24a, 29b ; 124a ; 224a ; 324a) comprend un élément détecteur de signal impulsionnel de référence (26 ; 126 ; 226) disposé de manière centrale et deux éléments détecteurs de signaux impulsionnels de référence (27.1, 27.2 ; 127.1, 127.2, 227.1, 227.2) disposés de manière symétrique par rapport à celui-ci dans la direction de mesure (x), lesquels éléments détecteurs génèrent les signaux de balayage déphasés de N*360° (N=1,2,...) par rapport à l'élément détecteur de signal impulsionnel de référence central (26 ; 126 ; 226) et l'élément détecteur de signal impulsionnel de référence disposé centralement (26 ; 126 ; 226), d'une part, et les deux éléments détecteurs de signaux impulsionnels de référence disposés symétriquement par rapport à celui-ci (27.1, 27.2 ; 127.1, 127.2 ; 227.1, 227.2), d'autre part, sont connectés de manière différentielle et le signal de différence représente le signal impulsionnel de référence (RI).

2. Dispositif de mesure de position selon la revendication 1, **caractérisé en ce que** la largeur ($b_1$) de l'élément détecteur de signal impulsionnel de référence (26 ; 126 ; 226) est sélectionnée de manière à être deux fois supérieure à largeur ($b_2$) de l'un des deux éléments détecteurs de signaux impulsionnels de référence (27.1, 27.2 ; 127.1, 127.2, 227.1, 227.2) disposés symétriquement par rapport à celui-ci.

3. Dispositif de mesure de position selon la revendication 2, **caractérisé en ce que** la largeur ($b_1$) de l'élément détecteur de signal impulsionnel de référence disposé centralement (26 ; 125 ; 226) est sélectionné de manière à être identique à la période de signal ($SP_{INC}$) du signal incremental (INC).

4. Dispositif de mesure de position selon la revendication 1, **caractérisé en ce que** l'espacement (d) de l'élément détecteur de signal impulsionnel de référence disposé centralement (26 ; 126 ; 226) par rapport aux éléments détecteurs de signaux impulsionnels de référence voisins (27.1, 27.2 ; 127.1, 127.2, 227.1, 227.2) est sélectionné conformément à :

$$d = \frac{SP_{INC}}{2\pi} * \arccos\left[\frac{1}{2\eta}\frac{\sin\left(\pi b_1 / SP_{INC}\right)}{\sin\left(\pi b_2 / SP_{INC}\right)}\right] - zSP_{INC}$$

avec

z : nombre entier
$SP_{INC}$ : période de signal du signal incrémental
$b_1$ : largeur de l'élément détecteur de signal impulsionnel de référence
$b_2$ : largeur d'un élément détecteur de signal impulsionnel de référence extérieur.

5. Dispositif de mesure de position selon la revendication 1, **caractérisé en ce que** l'espacement (d) de l'élément détecteur de signal impulsionnel de référence disposé centralement (26 ; 126 ; 226) par rapport aux éléments détecteurs de signaux impulsionnels de référence voisins (27.1, 27.2 ; 127.1, 127.2, 227.1, 227.2) est sélectionné conformément à :

$$d = n*SP_{INC} + 0,5\ b_2$$

ou

$$d = n*SP_{INC} - 0,5\ b_2$$

avec :

$SP_{INC}$ : période de signal du signal incrémental
$b_2$ : largeur d'un élément détecteur de signal impulsionnel de référence extérieur
$n$ : 0, 1, 2, 3, ...

6. Dispositif de mesure de position selon la revendication 1, **caractérisé en ce que**, dans la région de marquage de référence (REF), dans la piste de division incrémentale (11 ; 111 ; 211 : 311) est intégré au moins un champ clair qui perturbe la périodicité de la piste de division incrémentale (11 ; 111 ; 211 ; 311) et dans lequel le champ clair est constitué d'une région de division (12b) ayant une réflectivité plus élevée ou une transparence plus élevée.

7. Dispositif de mesure de position selon la revendication 6, **caractérisé en ce que** le champ clair présente, dans la direction de mesure (x), une largeur qui correspond à une période de division doublée ($TP_M$) de la piqte de division incrémentale (11 ; 111 ; 211 ; 311) ou à 1,5 fois la période de division ($TP_M$) sz l piste de division incrémentale (11 ; 111 ; 211 ; 311).

8. Dispositif de mesure de position selon la revendication 6, **caractérisé en ce que** le champ clair est disposé ce manière à ce que, dans la direction de mesure (x), l'espacement par rapport à la région de division voisine la plus proche (12b) ayant une réflectivité plus élevée ou une transparence plus élevée présente une largeur maximale sur l'échelle de mesure (10 ; 100 ; 200 ; 300), dans lequel le nombre des régions de division supprimées ayant une réflectivité plus élevée ou une transparence plus élevée est sélectionnée de manière à ce qu'il soit le plus faible possible.

9. Dispositif de mesure de position selon la revendication 8, **caractérisé en ce que** l'espacement du champ clair, dans la direction de mesure (x), par rapport à la région de division voisine la plus proche (12b) ayant une réflectivité plus élevée ou une transparence plus élevée sur l'échelle de mesure (10 ; 100 ; 200 ; 300), est égal à 1,5 fois la période de division ($TP_M$) de la piste de division incrémentale (11 ; 111 ; 211 ; 311).

10. Dispositif de mesure de position selon la revendication 6, **caractérisé en ce que** le marquage de référence (REF) dans la piste de division incrémentale (311) comprend plusieurs champs clairs répartis dans la direction de mesure (x).

11. Dispositif de mesure de position selon la revendication 1 ou 6, **caractérisé en ce que** le dispositif détecteur destiné à générer un signal impulsionnel de référence (RI) comprend plusieurs unités de détection de signaux impulsionnels de référence (324a) disposées de manière espacée les unes des autres dans la direction de mesure (x).

12. Dispositif de mesure de position selon la revendication 11, **caractérisé en ce que** les unités de détection de signaux impulsionnels de référence (324a) sont toutes réalisées de manière identique.

13. Dispositif de mesure de position selon au moins l'une des revendications précédentes, **caractérisé en ce que**, du côté de l'unité de balayage (20) de la source de lumière (21), une division d'émission essentiellement périodique (22 ; 122 ; 222 ; 322) ayant des régions de division transparentes ou opaques est disposée en amont et comporte au moins une région accordée au marquage de référence (REF) ayant une structure de division apériodique.

14. Dispositif de mesure de position selon la revendication 13, **caractérisé en ce que**, dans la région de division d'émission (22 ; 122 ; 222 ; 322) ayant la structure de division apériodique, au moins l'une des régions de division transparentes ou opaques n'est pas présente.

**15.** Dispositif de mesure de position selon la revendication 14, **caractérise en ce que**, dans la région de la division d'émission (22 ; 122 ; 222 ; 322) ayant la structure de division apériodique, exactement l'une des régions de division transparentes ou opaques n'est pas présente.

**16.** Dispositif de mesure de position selon au moins l'une des revendications précédentes, **caractérisé en ce que** l'unité de balayage (20) comprend une plaque de balayage (25), dans laquelle

- la division d'émission (22) est disposée dans une région centrale,
- des éléments détecteurs de signaux incrémentaux sont disposés au voisinage de la division d'émission (22) et
- au moins une unité à détecteur de signal impulsionnel de référence (24a, 24b) est disposé perpendiculairement à la direction de mesure (x) à proximité de la direction d'émission (22).

**17.** Dispositif de mesure de position selon la revendication 16, **caractérisé en ce que** plusieurs unités à détecteurs de signaux impulsionnels de référence sont disposés sur la plaque de balayage (25) et **en ce que** des éléments détecteurs de signaux incrémentiels sont en outre disposés entre les éléments détecteurs de signaux impulsionnels de référence.

**18.** Dispositif de mesure de position selon la revendication 13, **caractérisé en ce que** la source de lumière (21) est réalisée sous la forme d'une source de lumière spatialement étendue.

**19.** Dispositif de mesure de position selon la revendication 1, **caractérisé en ce que** la source de lumière est réalisée sous la forme d'une source de lumière ponctuelle.

**20.** Dispositif de mesure de position selon la revendication 1, **caractérisé en ce que** la source de lumière est réalisée sous la forme d'un réseau de sources de lumière ponctuelles qui sont disposées perpendiculairement à la direction de mesure.

FIG. 1

EP 1 691 172 B1

FIG. 2a

FIG. 2b

FIG. 3a

122

X

FIG. 3b

REF

100

111

FIG. 3c

126

127.2

127.1

S1

124a

RI

S2

FIG. 4a

-4mm          $X_{REF}$          +4mm

FIG. 4b

S1

S2

-0,04mm          $X_{REF}$          +0,04mm

FIG. 4c

RI

-0,04mm          $X_{REF}$          +0,04mm

FIG. 5a

FIG. 5b

FIG. 5c

FIG. 6a

-4mm    X_REF    +4mm

FIG. 6b

-0,04mm    X_REF    +0,04mm

FIG. 6c

-0,04mm    X_REF    +0,04mm

FIG. 7a

322

FIG. 7b

REF

311 — 

— 300

FIG. 7c

S1

324a

— RI

S2

FIG. 8a

X_REF

FIG. 8b

S1  S2

X_REF

FIG. 8c

RI

X_REF

FIG. 9a

— 422

X

FIG. 9b

REF

— 400

— 411

FIG. 9c

S1

426.2

427.1

424a

427.2

426.1

RI

S2

FIG. 10a

422

X

FIG. 10b

REF

500

511

FIG. 10c

S1

RI

S2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3985448 A
- WO 9908074 A
- EP 0887625 A2
- WO 02065061 A1
- WO 9908074 A1
- EP 0896206 A2

**In der Beschreibung aufgeführte Nicht-Patentliteratur**

- **R.M. PETTIGREW.** Analysis of Grating Images and its Application to Displacement Metrology. *SPIE Vol. 136, 1st European Congress on Optics Applied to Metrology,* 1977, vol. 136, 325-332